# EUROPÄISCHE PATENTSCHRIFT

(11) **EP 3 257 595 B1**
(45) Veröffentlichungstag und Bekanntmachung des Hinweises auf die Patenterteilung: **07.06.2023**
(21) Anmeldenummer: 17173583.0
(22) Anmeldetag: 30.05.2017
(51) Int. Cl.: B08B 5/02, B08B 3/02

(54) **KANALSEGMENT EINER DURCHLAUFREINIGUNGSANLAGE UND REINIGUNGSVERFAHREN FÜR MASSENTEILE**
CHANNEL SEGMENT OF A RUN-THROUGH CLEANING DEVICE AND METHOD FOR CLEANING BULK PARTS
SEGMENT DE CANAL D'UNE INSTALLATION DE NETTOYAGE CONTINU ET PROCÉDÉ DE NETTOYAGE DE PIÈCES EN VRAC

(30) Priorität: 16.06.2016 DE 102016111050
(43) Veröffentlichungstag der Anmeldung: 20.12.2017
(73) Patentinhaber: OSSBERGER GmbH + Co KG, 91781 Weißenburg (DE)
(72) Erfinder: Hüttinger, Markus, 86650 Wemding (DE); Dr. Ossberger, Karl-Friedrich, 91781 Weißenburg (DE); Garscha, Markus, 91792 Ellingen (DE)
(74) Vertreter: HWP Intellectual Property

(56) Entgegenhaltungen:
- DE-A1- 1 632 023
- DE-A1- 4 122 864
- DE-A1- 4 425 765
- DE-U1- 20 006 495
- US-A- 3 071 497
- US-A- 4 324 265
- US-A- 5 351 354
- US-A1- 2001 049 926
- US-A1- 2012 067 382

## Beschreibung

### 1. Gebiet der Erfindung

Die vorliegende Erfindung betrifft ein modulares tunnelartiges Kanalsegment einer Durchlaufreinigungsanlage, eine Durchlaufreinigungsanlage für Massenteile, die beispielsweise aus einer Bearbeitungsmaschine kommen wie Schrauben, Presslinge, Drehteile oder dergleichen, sowie ein Reinigungsverfahren derartiger Massenteile, welches mithilfe der Durchlaufreinigungsanlage realisiert wird.

### 2. Hintergrund der Erfindung

Nach der Herstellung von Mehrmassenteilen, wie beispielsweise Drehteile für Kugellager, Presslinge, Verbindungselemente und dergleichen, sind deren Oberflächen unter anderem mit Spänen aufgrund der Bearbeitung, Schmier- und/oder Kühlmitteln sowie möglicherweise mit Öl verschmutzt. Gerade bei hoch präzisen Bauteilen oder Bauteilen mit geringen Verschleißtoleranzen ist es erforderlich, jegliche Schmutzrückstände von der Bauteiloberfläche zu entfernen. Da dies aufwändige Reinigungsvorgänge erfordert, versucht man diese Reinigungsvorgänge soweit wie möglich zu automatisieren und an einen hohen Teiledurchsatz anzupassen.

In diesem Zusammenhang schlägt DE 102 26 808 A1 eine Reinigungsvorrichtung für Oberflächen vor. Hier ist das Ziel, die Oberflächen von Stäuben und Partikeln mithilfe von Linearbürsten zu reinigen. Diese Linearbürsten werden quer zur Oberfläche des Bauteils bewegt. Um dieses Reinigen mithilfe der Linearbürsten weiter zu unterstützen, sind Flüssigkeits- und Luftversorgungsdüsen zwischen den Linearbürsten angeordnet. Aufgrund der Anordnung dieser Düsen zwischen zwei benachbarten Linearbürsten bilden diese Bürsten eine kammerähnliche Anordnung, in der der Reinigungsvorgang stattfindet. Diese Anordnung ist leider nur für Oberflächen nutzbar, da beispielsweise bei Massenteilen mit einer umlaufenden Werkstückoberfläche nur eine einseitige Reinigung möglich wäre.

Eine weitere Anordnung offenbart DE 37 10 367. Hier werden Massenteile auf einem Förderband bewegt und mithilfe von Luftdüsen abgeblasen. Da dieser Reinigungsvorgang nicht in einem geschlossenen Kanal stattfindet, ist der Eintrag von zusätzlicher Verschmutzung durch die Umgebung ohne weiteres möglich. Zudem führt das genutzte Förderband dazu, dass zunächst abgetragene Verschmutzung, beispielsweise zu Beginn der Reinigungsstrecke, mithilfe des Förderbands weitertransportiert wird. Auf diese Weise ist es leichter möglich, dass Verschmutzungen mit den zu reinigenden Massenteilen mitgeschleppt werden.

DE 10 2014 103 542 A1 wiederum beschreibt eine Reinigungskammer, in die die zur Reinigung vorgesehenen Werkstücke eingebracht werden. Als Reinigungsmedium innerhalb dieser Reinigungskammer wird neben Druckluft auch Dampf in die Reinigungskammer eingeblasen. Die Kombination von Druckluft und Dampf soll für ein besseres Abblasen der Arbeitsrückstände von der Bauteiloberfläche sorgen.

DE 101 22 992 C1 beschreibt eine Reinigungsvorrichtung zum Entölen von Massenteilen mit struktureller Oberfläche mithilfe von Druckluftstrahlen. Zu diesem Zweck werden die Massenteile in einem stetigen Zwangsvorschub der Reinigungsvorrichtung zugeführt. Dieser Zwangsvorschub führt die Massenteile in eine Behandlungskammer, wo sie über Schlitzdüsen mit Druckluft beaufschlagt werden. Da die Schlitzdüsen bzw. allgemein die Düsen auf die gesamte Behandlungskammer verteilt angeordnet sind, wird der Druckluftstrom über die gesamte Länge der Behandlungskammer um die zu reinigenden Werkstücke herumgeführt. Zwar werden durch diese Reinigungsvorrichtung die äußeren Umfangsflächen der Massenteile gereinigt, aber durch den Zwangsvorschub decken sich die aneinandergrenzenden Stirnflächen der Massenteile gegenseitig ab. Dies führt dazu, dass Schmiermittelrückstände an diesen Stirnseiten weiterhin vorhanden sind, obwohl das Massenteil die Reinigungskammer durchlaufen hat.

Eine weitere Reinigungsvorrichtung geht aus DE 44 25 765 C2 hervor. Auch hier werden Massenteile mithilfe eines Förderers durch eine kanalartige Reinigungsanordnung bewegt. Wie bereits oben erwähnt worden ist, führt ein innerhalb des Kanals angeordneter Förderer dazu, dass neben den Oberflächen der Massenteile auch der Förderer selbst gereinigt werden muss, um die abgetragene Verschmutzung nicht mit den Massenteilen wieder aus dem Reinigungskanal herauszuführen. Eine derart umfassende Reinigung kann aber bei Nutzung eines derartigen Förderers nicht garantiert werden. Des Weiteren wird im wesentlichen Luft als Reinigungsmedium verwendet. Diese Luft wird auf die Oberflächen der Massenteile geblasen, um eventuelle Verschmutzungen zu entfernen. Gleichzeitig führt dieses Abblasen aber auch zu einem Aufwirbeln der auf den Oberflächen vorhandenen Verschmutzungen, die sich nach einer gewissen Zeit wieder an anderen Oberflächen ablagern. Derartige Oberflächen werden durch andere Massenteile sowie durch den Förderer bereitgestellt, so dass erneut diese Oberflächen gereinigt werden müssen. Somit ist davon auszugehen, dass die hier angewandte Reinigungsmethode in Form des Abblasens mit Druckluft nur begrenzt erfolgreich ist.

In der DE 1 632 023 A1 sind ein Verfahren und ein Spritztunnel zur Reinigung von Flaschenkästen beschrieben. Dieses Dokument geht dabei von einem Verfahren zur Reinigung von Flaschenkästen aus, gemäß welchem die Kästen in umgekehrter Lage in einem von ihnen durchlaufenen Spritztunnel an- und ausgespritzt werden. Ein derartiges Verfahren umfasst, dass die Flaschenkästen während ihres Durchlaufes durch den Spritztunnel mindestens einmal um die Achse ihrer Fortbewegungsrichtung gedreht werden. Dabei werden die zu reinigenden Flaschenkästen beim Durchlauf durch den Spritztunnel auch stirnseitig bespritzt. Den zu reinigenden Flaschenkästen wird vor ihrem Eintritt in den Spritztunnel ein Fremdvorschub erteilt, so dass sie gezwungen sind, sich längs im Tunnelinneren angeordneten, in an sich bekannter Weise innensteilgewindeartig verlaufender Führungsleisten um die Achse ihrer Bewegungsrichtung zu drehen.

Eine Vorrichtung zum Reinigen von Dosenenden ist in der US 4,324,265 A beschrieben. Dieses Dokument offenbart ein modulares tunnelartiges Kanalsegment gemäß dem Oberbegriff von Patentanspruch 1. Die Vorrichtung ist in Form eines flachen kreisförmigen Elements mit einer Anzahl von Hochdruckfluidöffnungen ausgebildet, die in einem Kreis auf einer flachen Fläche des Elements angeordnet und intern mit einem Hochdrucklufteinlass verbunden sind. Im Wechsel mit den Öffnungen ist eine Anzahl von Durchgangsbohrungen vorgesehen, die als Auslasskanäle dienen.

Es ist daher die Aufgabe vorliegender Erfindung, ein verbessertes Reinigungssystem für Massenteile bereitzustellen, in dem Oberflächenverschmutzungen, wie beispielsweise Schmiermittelrückstände oder Späne, von allen äußeren Oberflächen der Massenteile verlässlich entfernt werden.

### 3. Zusammenfassung der Erfindung

Die obige Aufgabe wird durch ein modulares tunnelartiges Kanalsegment gemäß dem unabhängigen Patentanspruch 1, durch eine Durchlaufreinigungsanlage gemäß Patentanspruch 9 sowie durch ein Reinigungsverfahren für Massenteile gemäß dem unabhängigen Patentanspruch 22 gelöst. Vorteilhafte Ausgestaltungen und Weiterentwicklungen vorliegender Erfindung ergeben sich aus der folgenden Beschreibung, den begleitenden Zeichnungen sowie den anhängenden Ansprüchen.

Die erfindungsgemäße Durchlaufreinigungsanlage für Massenteile weist die folgenden Merkmale auf: mindestens ein erfindungsgemäßes modulares tunnelartiges Kanalsegment, durch das die Massenteile in Längsrichtung entlang eines Reinigungswegs in einem Kanalinneren bewegbar sind, eine Fördereinrichtung der Massenteile, die außerhalb des mindestens einen Kanalsegments, insbesondere außerhalb des Kanalinneren angeordnet ist, und mit der die Massenteile in einem Zwangsvorschub in Reihe mit gegenseitiger Anlage benachbarter Massenteile durch das mindestens eine Kanalsegment in einer Bewegungsrichtung schiebbar sind, ohne dass sich die Fördereinrichtung durch das Kanalinnere bewegt, wobei das Kanalinnere konstruktiv einen zumindest teilweise krummlinigen Verlauf des Reinigungswegs definiert, wodurch eine Anordnung benachbarter Massenteile zueinander während einer Bewegung durch das Kanalinnere veränderbar ist, und eine Mehrzahl von in und auf das Kanalsegment verteilten Medienzufuhrleitungen in und mindestens eine Abfuhrleitung, vorzugsweise eine Absaugleitung, aus dem Kanalinneren. Aufgrund des krummlinigen Verlaufs des Reinigungswegs ist die gegenseitige Anlage benachbarter Massenteile an Stirnseiten von einer flächigen Anlage in eine punktuelle Anlage während einer Bewegung durch das Kanalinnere veränderbar. Die Massenteile werden durch das tunnelartige Kanalsegment in gegenseitiger Anlage durch die Fördereinrichtung geschoben, die außerhalb des tunnelartigen Kanalsegments angeordnet ist.

Die oben beschriebene Durchlaufreinigungsanlage stellt zunächst einen aufgrund des Kanalinneren zumindest in umfänglicher Richtung abgeschlossenen Bereich dar, durch den die zu reinigenden Massenteile bewegt werden. Dies minimiert das die Massenteile umgebende Volumen, so dass gezielt Reinigungsmedien, wie beispielsweise Luft und Reinigungsflüssigkeit, auf die Oberflächen aufgetragen, und von diesen auch wieder zusammen mit der Verschmutzung abgeführt werden können. Lediglich in Bewegungsrichtung der zu reinigenden Massenteile ist der Kanal bevorzugt offen. Des Weiteren ist mit dieser Konstruktionswahl der Vorteil verbunden, dass die zu- und abzuführende Medien genauer und mit geringerem technischen Aufwand in einem vorteilhaften Druckbereich eingestellt werden können.

Ein weiterer Vorteil vorliegender Erfindung besteht darin, dass die Massenteile in einem Zwangsvorschub durch den Kanal bewegt werden. Dies wird ohne eine durch den Kanal bewegte Fördereinrichtung realisiert. Da die Fördereinrichtung das Mitführen und Beibehalten von Verschmutzungen unterstützt, wurde darauf gezielt verzichtet. Um aber bei dem verwendeten Zwangsvorschub auch den Zugang zu den und die Reinigung der aneinander anliegenden Stirnseiten von benachbarten Massenteilen zu ermöglichen, zeichnet sich das Kanalinnere durch einen zumindest teilweise krummlinigen Verlauf des Reinigungswegs der Massenteile aus. Dies bedeutet, dass sich die Massenteile nicht ausschließlich geradlinig oder in unveränderter Ausrichtung benachbarter Massenteile zueinander durch die Durchlaufreinigungsanlage bewegen. Da sie den durch das Kanalinnere vorgegebenen Krümmungen des Reinigungswegs folgen müssen, reduziert sich zumindest an bestimmten Positionen oder in bestimmten Bereichen des Reinigungswegs im Kanalinneren die gegenseitige Anlage benachbarter Massenteile an deren Stirnseiten bis auf eine punktuelle Anlage, um die Vorschubkraft zwischen den Massenteilen weiter übertragen zu können. Wandelt sich aber eine bevorzugte stirnseitige Anlage der Massenteile von einer flächigen Anlage in eine punktuelle Anlage, dann ist der Rest der Stirnflächen zugänglich für ein oder mehrere Reinigungsmedien. Die punktuelle Anlage wird zudem bevorzugt über die nicht geradlinige Zwangsführung im Kanalinneren derart verändert, dass sämtliche Oberflächen und Geometriemerkmale des Massenteils für Medien zugänglich werden. Diese Reinigungsmedien tragen dann die dortige Verschmutzung ab, so dass am Ende des Kanalsegments bzw. am Ende einer Mehrzahl hintereinander angeordneter Kanalsegmente ein gereinigtes Massenteil vorliegt. Wie unten näher erläutert ist, werden Krümmungen des Reinigungswegs durch in das Kanalinnere ragende Schikanen oder durch einen krummlinigen Verlauf des Kanalinneren selbst erzielt.

Des Weiteren wurde es als vorteilhaft erkannt, neben oder anstelle von Luft als Reinigungsmedium auch andere Medien, vorzugsweise Flüssigkeiten, als Reinigungsmedium einzusetzen. Daher ist es bevorzugt, mehrere Reinigungsmedien oder Luft und mindestens eine Reinigungsflüssigkeit oder ein anderes Lösemittel, wie bevorzugt CO₂, als Reinigungsmedium kombiniert zu verwenden, um den Abtrag von Verschmutzungen von der Oberfläche der Massenteile zu verbessern. Beispielsweise wird COz als Lösemittel im halbflüssigen Zustand verwendet. Ebenso ist es vorteilhaft, ein ionisiertes gasförmiges Medium als Reinigungsmedium zu verwenden. Auf diese Weise sind beispielsweise auf geladenen Oberflächen des zu reinigenden Massenteils anhaftende Kunststoffpartikel ablösbar. Eine Ionisation des gasförmigen Mediums, wie beispielsweise Luft, erfolgt, indem das Medium durch Spulen geleitet wird. Vorteilhafterweise erfolgt die Zufuhr eines ionisierten gasförmigen Mediums insbesondere mittels einer Ionisationsdüse. Zudem dient der Einsatz von Flüssigkeiten vorzugsweise dazu, die für reine Luftreinigung vorgesehenen Kanalsegmente durch die Flüssigkeit zu spülen. Dies realisiert die bevorzugte Selbstreinigung der Durchlaufreinigungsanlage.

Gemäß einer vorteilhaften Ausgestaltung der erfindungsgemäßen Durchlaufreinigungsanlage ist das mindestens eine Kanalsegment mithilfe eines Schnellspannsystems befestigt und austauschbar. Diese Konstruktion gewährleistet eine schnelle und nur mit geringem Wartungsaufwand verbundene individuelle Anpassung einer Durchlaufreinigungsanlage an eine neue Geometrie eines Massenteils. Zudem ist es möglich, defekte Kanalsegmente ohne Aufwand zu erkennen (Inspektion) und ggf. auszutauschen. Ein weiterer Vorteil besteht darin, dass man flexibel auf Reinigungsdefizite oder eine andere Notwendigkeit zur Änderung des Reinigungswegs reagieren kann.

Gemäß einer weiteren bevorzugten Ausführungsform vorliegender Erfindung sind die Luftzufuhrleitungen über einen Filter mit einer Umgebung der Durchlaufreinigungsanlage verbunden. Des Weiteren wird in der Absaugleitung für die Luft aus dem Kanalinneren ein Unterdruck im Vergleich zum im Kanalinneren wirkenden Umgebungsdruck, vorzugsweise in einem Bereich von 0≤p≤500 hPa, erzeugt. Im Gegensatz zu aus dem Stand der Technik bekannten Reinigungsanlagen wird die Luft hier nicht auf die Oberfläche der zu reinigenden Massenteile geblasen. Ein derartiges Anblasen von Oberflächen entfernt zwar zunächst Verschmutzung von dieser Oberfläche, die aber gleichzeitig vorhandenen Luftwirbel führen zu einer Ablagerung der Verschmutzung an einer nicht vorhersagbaren anderen Oberfläche. In diesem Zusammenhang wurde festgestellt, dass das Abblasen von Verschmutzungen häufig zu einer Umlagerung der Verschmutzung auf der Oberfläche des Massenteils führt, nicht aber zu deren Reinigung. Aus diesem Grund ist es bevorzugt, dem Kanalinneren zugeführte Luft aus dem Kanalinneren durch Unterdruck gezielt abzusaugen. Dieser Absaugvorgang erzeugt eine Umströmung der Massenteile, die dann Verschmutzung von der Oberfläche des jeweiligen Massenteils mitreißt. Die angesaugte Luft folgt dem Weg des geringsten Widerstands. Durch Änderung der Kanalführung werden Spaltmaße zwischen innerer Kanalwand und Massenteil in Form und Länge so ausgelegt, dass das Werkstück für die Reinigungsaufgabe günstig umströmt wird. Auch speziell auf die Reinigung von Funktionsflächen, wie beispielsweise Bohrungen, Einstiche, Hinterschnitte, wird bevorzugt auf diese Weise eingegangen.

Gemäß einer weiteren bevorzugten Ausführungsform vorliegender Erfindung weist das mindestens eine Kanalsegment eine Mehrzahl von Schikanen auf, die in das Kanalinnere ragen, so dass benachbarte Massenteile während einer Bewegung durch das Kanalinnere in einer Ausrichtung zueinander veränderbar sind. Daher ist es bevorzugt, den Reinigungsweg lediglich teilweise geradlinig verlaufen zu lassen und mit krummlinig verlaufenden Wegsegmenten zu kombinieren. Der krummlinige Verlauf des Reinigungswegs führt dazu, dass die aneinander anliegenden Massenteile, insbesondere die aneinander angrenzenden zueinander benachbarten Massenteile, diesem krummlinigen Reinigungsweg folgen müssen. Auf diese Weise ändern sich die Größen der aneinander anliegenden Flächenbereiche der Stirnflächen und Berührungspunkte von zu einander benachbarten Massenteilen im Zwangsvorschub im Kanalinneren. Da Kontaktpunkte zur Weitergabe der Vorschubbewegung zwischen benachbarten Massenteilen verändert werden, werden gleichzeitig zuvor besetzte Flächenelemente zur Reinigung freigegeben. Daher ist es erfindungsgemäß bevorzugt, gerade diese krummlinigen Segmente des Reinigungswegs zur Abtragung von Verschmutzungen an Oberflächensegmenten zu nutzen, die gerade bei einem geradlinigen Reinigungsweg schlechter zugänglich sind. Um diesen krummlinigen Reinigungsweg zu erzeugen, sind Schikanen ähnlich wie Bodenwellen oder in den Bewegungspfad der Massenteile hineinragende Ablenkpunkte vorgesehen. Diese Schikanen zwingen die Massenteile während des Zwangsvorschubs, von dem geradlinigen Weg abzuweichen. Auf diese Weise verkippen benachbarte Massenteile zueinander, was zu reinigende Oberflächensegmente und/oder Innenräume und/oder Geometriemerkmale, wie Bohrungen oder Nuten, frei gibt.

Gemäß einer weiteren bevorzugten Ausführungsform vorliegender Erfindung ragt eine Mehrzahl von Schikanen entgegen einer Gewichtskraft der Massenteile und/oder eine weitere Mehrzahl von Schikanen seitlich zur Bewegungsrichtung in das Kanalinnere hinein. Somit wirken die entgegen der Gewichtskraft ausgerichteten Massenteile bevorzugt ähnlich wie Bodenwellen auf einer Straße. Seitlich dazu ausgerichtete Schikanen haben die gleiche Wirkung wie die bodenwellenähnlichen Schikanen, nur dass sie aus einer anderen Raumrichtung auf die Massenteile einwirken.

In diesem Zusammenhang ist es weiterhin bevorzugt, dass das Kanalinnere krummlinig verläuft, vorzugsweise mit einem Krümmungsradius im Bereich des 2- bis 3-fachen der Länge eines Massenteils. Der Krümmungsradius kann jedoch nach je nach Werkstückform größer oder kleiner ausfallen, wenn es die Geometrie der Massenteile erfordert oder zulässt. Die Abmessungen des Kanalinneren werden bevorzugt derart gewählt, dass die zu reinigenden Massenteile während ihrer Bewegung durch das Kanalinnere mit krummlinigem Verlauf oder mit Schikanen oder mit einer Mischung aus beidem nicht im Kanalinneren verkanten, verklemmen bzw. stecken bleiben. Zudem bewirken die krummlinigen Passagen des Kanalinneren in gleicher Weise wie die einzelnen Schikanen, dass sich zwischen den Stirnseiten benachbarter Massenteile zumindest temporär während der Bewegung durch das Kanalinnere ein maximaler Öffnungswinkel von ≤ 40 ° ausbildet. Es ist ebenfalls bevorzugt, mehrere Bereiche mit unterschiedlichen Krümmungsradien aneinandergrenzend oder beabstandet zueinander hintereinander zu schalten.

Gemäß einer weiteren bevorzugten Ausführungsform vorliegender Erfindung sind mindestens zwei Kanalsegmente in Bewegungsrichtung hintereinander angeordnet, um unterschiedliche Reinigungszonen bereitzustellen, wobei die Kanalsegmente durch beabstandete Anordnung und/oder einen Luftvorhang und/oder eine Drucksenke voneinander getrennt sind. Die erfindungsgemäß bevorzugten benachbarten unterschiedlichen Reinigungszonen ermöglichen eine gezielte Abstimmung der durchzuführenden Reinigung auf den Grad der Verschmutzung der Massenteile und/oder auf die spezielle Geometrie der zu reinigenden Massenteile. Daher werden die bevorzugten Reinigungszonen dazu genutzt, einzelne Reinigungsaufgaben auf bestimmte Reinigungszonen zu fokussieren und nicht mehrere Reinigungsvorgänge in nur einer Reinigungszone zu überlagern. So ist es beispielsweise bevorzugt, in einer ersten Reinigungszone Verschmutzungen von der Oberfläche der Massenteile abzusaugen. Neben diesen Verschmutzungen werden natürlich auch Ölrückstände von der Oberfläche der Massenteile abgesaugt. Da sich die Durchlaufreinigungsanlage dadurch auszeichnet, dass sie kein Förderelement innerhalb der Kanalsegmente verwendet, findet auch keine Verschleppung von abgetragenen Verschmutzungen oder Reinigungsmedien von der ersten Reinigungszone, hier mit Absaugluft in eine nachfolgende Reinigungszone statt. In einer nachfolgenden Reinigungszone wird dann beispielsweise eine Reinigungsflüssigkeit auf die Massenteile aufgetragen, um Verschmutzungen zu lösen. Um eine gegenseitige Beeinflussung der Reinigungszonen zu minimieren, werden bevorzugt diese Reinigungszonen durch einen Luftvorhang, eine Drucksenke, angepasste Strömungen oder durch eine Schikane die Bereiche in denen verschiedenen Medien verwendet werden wie die Vorreinigung über Absaugung und oder durch eine Spülzone mit Flüssigkeit voneinander getrennt.

Gemäß einer weiteren bevorzugten Ausführungsform vorliegender Erfindung ist das mindestens eine Kanalsegment in Schwingungen versetzbar. Während die Massenteile bevorzugt innerhalb des Kanalsegments mit unterschiedlichen Reinigungsmedien und/oder mit Luft beaufschlagt werden, ist es von Vorteil, zusätzliche Reinigungsenergie mithilfe von Schwingungen zuzuführen. Somit ist es nicht allein Aufgabe der Reinigungsmedien oder der zugeführten Luft, Verschmutzungen oder Ölrückstände von der Oberfläche der Massenteile abzutragen. Vielmehr wird mithilfe der Vibrationen des Kanalsegments die Schwingung auf die zu reinigenden Massenteile übertragen, so dass sich eventuelle Verschmutzungen leichter von der Oberfläche der Massenteile lösen können. Zudem kann die Vibration in Kombination mit einer getakteten Fördereinrichtung derart genutzt werden, dass die Werkstücke in einer Förderpause gegen benachbarte Flächen stoßen. Die Auf- und Anliegeflächen werden somit für die Reinigung zugänglich. Weiterhin begünstigt die Vibration das Fördern durch den Kanal, da Reibung und Verkanten der Masseteile reduziert wird.

In einer weiteren bevorzugten Ausführungsform der erfindungsgemäßen Durchlaufreinigungsanlage wird dem Kanalinneren Umgebungsluft als Reinigungsmedium über mindestens eine Luftzufuhrleitung als Medienzufuhrleitung zugeführt. Dazu wird vorzugsweise mittels eines Kompressors oder Verdichters ein Unterdruck erzeugt und damit die im Reinigungskanal befindliche Luft abgesaugt. Dieses Absaugen steuert gleichzeitig die Luftzufuhr in den Reinigungskanal. Dadurch werden bevorzugt die zu reinigenden Teile gerade nicht über die Luftzufuhr abgeblasen, sondern über die Luftabfuhr abgesaugt. Die mit Verunreinigungen beladene Luft strömt dann über eine Absaugleitung als Abfuhrleitung aus dem Kanalinneren über eine Abscheidevorrichtung, wie beispielsweise einen Zyklonabscheider, durch den Kompressor und wird dann an die Umgebung abgegeben.

Im Verdichter wird die Luft aufgrund der Verlustleistung des Verdichters sowie der Kompression der Luft erwärmt. Um die Umgebung der Durchlaufreinigungsanlage nicht unnötig zu erwärmen, ist es daher bevorzugt, die erwärmte Luft nach dem Verdichter in eine Wärmeabführvorrichtung, wie beispielsweise einen Wärmetauscher, zu leiten, bevor sie an die Umgebung abgegeben wird. Die Kühlleistung der Wärmeabführvorrichtung kann beispielsweise über ein Stellventil gesteuert oder über einen Temperatursensor in der Abluftleitung oder im Reinigungskanal geregelt werden. Zudem ist es bevorzugt, die erwärmte Luft direkt an die Umgebung oder werkseitige Absauganlage abzugeben.

In einer besonders bevorzugten Ausführungsform umfassen die Medienzufuhrleitungen mindestens eine Luftzufuhrleitung, mit der dem Kanalsegment gereinigte und erwärmte Luft zuführbar ist. Hierzu können in der Luftzufuhrleitung ein Filter sowie eine Heizvorrichtung vorgesehen sein.

Besonders vorteilhaft ist es, wenn die Luftzufuhrleitung mit einer Absaugleitung als Abfuhrleitung des Kanalsegments über eine Abscheidevorrichtung direkt oder vorzugsweise indirekt über das Kanalsegment verbunden ist, so dass zumindest ein Teil der zur Reinigung verwendeten Luft in einem Kreislauf bewegt wird. Im Unterschied zu der oben beschriebenen Ausführungsform wird auf diese Weise ein Kreislauf für die gereinigte Luft als Reinigungsmedium gebildet. Ein Vorteil dieser Vorgehensweise ist, dass kein Schmutz aus der Umgebungsluft von außen auf die zu reinigenden Werkstücke aufgebracht wird. Anders formuliert verringert sich durch die Wiederverwendung der Luft aus dem Reinigungskanal der Schmutzeintrag von außen, ohne dass eigene Filtervorrichtungen in der Luftzufuhrleitung verwendet werden müssen. Im Kanalsegment vorhandene Formdüsen können dabei ohne Veränderung benutzt werden. Optional können Filtermatten auf den Düsen aufgrund der sauberen erwärmten Luft sogar entfallen, was den Wartungsaufwand der Durchlaufreinigungsanlage entsprechend reduziert.

Ein weiterer Vorteil dieser Vorgehensweise ist, dass dem Kanalsegment bereits warme Luft als Reinigungsmedium zugeführt werden kann. Die Erwärmung kann hierbei aufgrund des vorhandenen Verdichters und/oder mittels einer eigenen Heizvorrichtung erfolgen. Aufgrund der erwärmten Luft als Reinigungsmedium kann entweder die Reinigungsleistung oder der Durchsatz der Durchlaufreinigungsanlage im entsprechenden Kanalsegment erhöht werden. Dies ist darin begründet, dass sich beispielsweise die Viskosität von vorhandenem Öl als Verunreinigung aufgrund der Reinigung mit erwärmter Luft verringert. Hierdurch liegt das Öl in kleineren Tropfen vor und kann leichter vom Werkstück gelöst werden.

Zusätzlich können die Medienzufuhrleitungen des Kanalsegments weiterhin eine Frisch- oder Umgebungsluftzufuhrleitung für Umgebungsluft als Reinigungsmedium aufweisen. Die entsprechende Funktionsweise ist weiter unten im Detail in Verbindung mit einer weiteren bevorzugten Ausführungsform beschrieben. Die Umgebungsluft kann hierbei gefiltert und/oder mit einem Lüfter angesaugt werden, was ebenfalls weiter unten im Detail beschrieben wird.

Gemäß einer weiteren bevorzugten Ausführungsform der Durchlaufreinigungsanlage ist weiterhin eine Wärmeabführvorrichtung, insbesondere ein Wärmetauscher, im Luftkreislauf vorgesehen, deren Leistung in Abhängigkeit von der Temperatur im Kanalsegment geregelt wird. Um die Temperatur der erwärmten Luft im Kreislauf zu regeln, ist im Kanalsegment ein Temperatursensor vorgesehen. Auf diese Weise kann die Temperatur der zur Reinigung verwendeten Luft gezielt vorgegeben werden. Alternativ ist es auch möglich, stromabwärts der Wärmeabführvorrichtung eine eigenständige Heizvorrichtung zur gezielten Einstellung der Temperatur der gereinigten Luft vorzusehen. Dies ist insbesondere dann sinnvoll, wenn über die Wärmeabführvorrichtung zu viel Wärme abgeführt wurde und/oder die Erwärmung der Luft aufgrund des Verdichters nicht ausreicht.

Insbesondere bei Öl als Verunreinigung und aufgrund der Arbeitssicherheit ist es bevorzugt, wenn die Temperatur der erwärmten Luft vorzugsweise ungefähr 80 °C und besonders bevorzugt ungefähr 70 °C im Kanalsegment nicht übersteigt. Eine untere Grenze für die Temperatur der erwärmten Luft im Kanalsegment liegt vorzugsweise bei ungefähr 50 °C. Besonders bevorzugt liegt die Temperatur der erwärmten Luft bei ungefähr 65 °C. Bezogen auf die Lufttemperatur im Verdichter sollte eine obere Grenze von 120 °C wegen des Flammpunkts des Öls nicht überschritten werden. Insgesamt kann die Reinigungsleistung auf diese Weise um ungefähr 40 % im Vergleich zu nicht erwärmter Luft erhöht werden. Zudem ist die Reinigungsleistung besser kontrollierbar, da insbesondere jahreszeitliche Schwankungen der Temperatur der Umgebungsluft keinen Einfluss auf die Temperatur der erwärmten Luft aufgrund des Luftkreislaufs haben.

Es ist weiterhin bevorzugt, dass ein Bypass im Luftkreislauf vorgesehen ist, so dass Luft an die Umgebung abgebbar ist, wobei die Medienzufuhrleitung weiterhin eine Frischluftleitung zum Zuführen von Umgebungsluft aufweist, die vorzugsweise Umgebungsluft über einen Filter zuführt. Aufgrund dieses Aufbaus kann dem Kanalsegment auf der einen Seite sowohl gereinigte und erwärmte Luft zur Verbesserung der Reinigungsleistung zugeführt werden. Andererseits ist dem Kanalsegment bereits aufgrund des Filters gereinigte Umgebungsluft zuführbar, so dass das gereinigte Werkstück zumindest teilweise gekühlt werden kann. Eine entsprechende Unterteilung im Kanalsegment kann beispielsweise strömungsmechanisch erfolgen, so dass über eine gezielte Luftführung im Kanalsegment eine entsprechende Luftmassen-Verteilung stattfindet. Wird über den Bypass keine erwärmte Luft an die Umgebung abgegeben, so gleicht der Betrieb der oben beschriebenen Ausführungsform ohne Bypass.

Im Betrieb sind beispielsweise zwischen 0 und 50 %, bevorzugt 10 bis 20 %, des vom Verdichter angesaugten Volumenstroms an warmer gereinigter Luft über den Bypass abführbar. Mit der Frischluftleitung wird mengenmäßig insbesondere der Volumenstrom, der über den Bypass abgeführt wurde, wieder zugeführt. Dies bedeutet, dass über die Frischluftleitung 0 bis 50 % des vom Verdichter angesaugten Volumenstroms zuführbar sind. Werden beispielsweise über den Bypass 10 % des Volumenstroms abgegeben, so werden über die Frischluftleitung 10 % wieder zugeführt.

In einer weiteren bevorzugten Ausführungsform ist in der Frischluftleitung ein Lüfter vorgesehen, so dass im Kanalsegment ein Überdruck bereitstellbar ist. Somit wird die gefilterte zugeführte Frischluft oder Umgebungsluft mittels Lüfter in das Kanalsegment gedrückt. Damit wird verhindert, dass über eventuell vorhandene Leckagen oder Undichtigkeiten ungefilterte Umgebungsluft angesaugt wird. Eine mögliche Verunreinigung des zu reinigenden Werkstücks aufgrund von Verunreinigungen in der Umgebungsluft ist daher weiterhin minimiert.

Die erwärmte und/oder Umgebungsluft wird bzw. werden in das Kanalsegment eingeblasen, in dem sich der Reinigungsweg befindet. Der Reinigungsweg nimmt das zu reinigende Werkstück auf und bildet zusammen mit dem zu reinigenden Werkstück eine Düse, über die Luft aus dem Kanalsegment angesaugt wird. Die Luft wird in dem Kanalsegment so zur Verfügung gestellt, dass keine Ansaugung über Leckagen oder ähnliches erfolgt, sondern die zugeführte erwärmte und/oder Umgebungsluft, die vorzugsweise über Düsen angesaugt wird, in geeigneter Form über Einlassdüsen in den Reinigungsweg strömt. Der Vorteil ist, dass bestehende Reinigungswege ohne Veränderungen und/oder Erweiterungen weiter genutzt werden können. Die Reinigungsleistung wird vorteilhaft von der Luftführung im Kanalsegment bestimmt. Weiterhin ist es bevorzugt, über die Leistungsanpassung der verwendeten Anlagentechnik an die zu reinigenden Massenteile die Reinigungsleistung zusätzlich zu verbessern.

Die bevorzugten Ausgestaltungen des bereits oben beschriebenen modularen tunnelartigen Kanalsegments der Durchlaufreinigungsanlage, durch das Massenteile in Längsrichtung entlang eines Reinigungswegs in einem Kanalinneren bewegbar sind, lassen sich folgendermaßen zusammenfassen. Das modulare tunnelartige Kanalsegment weist konstruktiv einen zumindest teilweise krummlinigen Verlauf des Reinigungswegs auf, wodurch eine Anordnung benachbarter Massenteile zueinander während einer Bewegung durch das Kanalinnere veränderbar ist. Vorzugsweise sind eine Mehrzahl von auf das Kanalsegment verteilter Medienzufuhrleitungen in und mindestens eine Abführleitung, vorzugsweise eine Absaugleitung, aus dem Kanalinneren vorgesehen. Des Weiteren bevorzugt weist das Kanalsegment mindestens eine Zufuhrleitung eines flüssigen Reinigungsmediums in und eine Abfuhrleitung aus dem Kanalinneren auf und ist mit einem Schnellspannsystem an einem Sockel befestigbar und von diesem lösbar.

Weiterhin bevorzugt ragt eine Mehrzahl von Schikanen in das Kanalinnere, so dass benachbarte Massenteile während einer Bewegung durch das Kanalinnere in einer Ausrichtung zueinander veränderbar sind. Dabei ist eine Mehrzahl der Schikanen gemäß unterschiedlicher bevorzugter Ausführungsformen vorliegender Erfindung entgegen einer Gewichtskraft der Massenteile und/oder eine Mehrzahl von Schikanen seitlich zur Bewegungsrichtung der Massenteile im Kanalinneren ausgerichtet und ragt entsprechend in das Kanalinnere.

Alternativ oder ergänzend zu den Schikanen verläuft das Kanalinnere bevorzugt krummlinig, um die Ausrichtung benachbarter Massenteile zueinander im Kanalinneren zu verändern. Gemäß einer weiteren bevorzugten Ausführungsform vorliegender Erfindung ist das Kanalsegment in Kombination mit einem Schwingungserzeuger, vorzugsweise ein Sockel, in Schwingungen versetzbar.

Vorliegende Erfindung umfasst zudem ein Reinigungsverfahren für Massenteile in einer Durchlaufreinigungsanlage, insbesondere einer Durchlaufreinigungsanlage gemäß einer der oben beschriebenen Ausführungsformen, das die folgenden Schritte aufweist: Bewegen der Massenteile in Reihe mit gegenseitiger Anlage aneinander durch mindestens ein erfindungsgemäßes Kanalsegment mit einer Fördereinrichtung, die außerhalb des Kanalsegments angeordnet ist, Beaufschlagen der Massenteile in einem Kanalinneren mit Luft über eine Luftzufuhrleitung in Verbindung mit einer Umgebung und einer Absaugleitung aus dem
Kanalinneren, Beaufschlagen der Massenteile im Kanalinneren mit einem flüssigen Reinigungsmedium über eine Zufuhrleitung und eine Abfuhrleitung, wobei das Bewegen der Massenteile entlang eines zumindest teilweise krummlinigen Reinigungswegs erfolgt, wodurch eine Anordnung benachbarter Massenteile zueinander während der Bewegung verändert wird. Zudem ist es bevorzugt, im Rahmen des erfindungsgemäßen Reinigungsverfahrens zusätzlich das mindestens eine Kanalsemgent und damit die Massenteile zu vibrieren, so dass Verschmutzungen der Massenteile von deren Oberflächen gelöst werden. Weiterhin ist es im Rahmen des erfindungsgemäßen Reinigungsverfahrens bevorzugt, dass das Beaufschlagen mit Luft mit über die Umgebungstemperatur erwärmter und/oder im Vergleich zur Umgebungsluft gereinigter Luft erfolgt. Hierbei ist es besonders bevorzugt, wenn eine Absaugleitung aus dem Kanalinneren mit der Luftzufuhrleitung verbunden ist, um einen Kreislauf für gereinigte erwärmte Luft bereitzustellen. Zusätzlich kann ein Beaufschlagen mit Umgebungsluft erfolgen, die entweder aufgrund eines bereits vorhandenen Verdichters in das Kanalsegment eingesaugt oder mittels eines eigenen Lüfters in das Kanalsegment gefördert wird. In beiden Fällen kann eine Reinigung der Umgebungsluft vor dem Eintritt in das Kanalsegment über einen Filter erfolgen. In Kombination mit dem Lüfter ist der Filter vorzugsweise stromaufwärts des Lüfters angeordnet. Ein Steuern der Temperatur der erwärmten Luft kann mittels einer Wärmeabführvorrichtung und/oder einer Heizvorrichtung erfolgen.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine bevorzugte Ausführungsform eines modularen Kanalsegments einer Durchlaufreinigungsanlage,

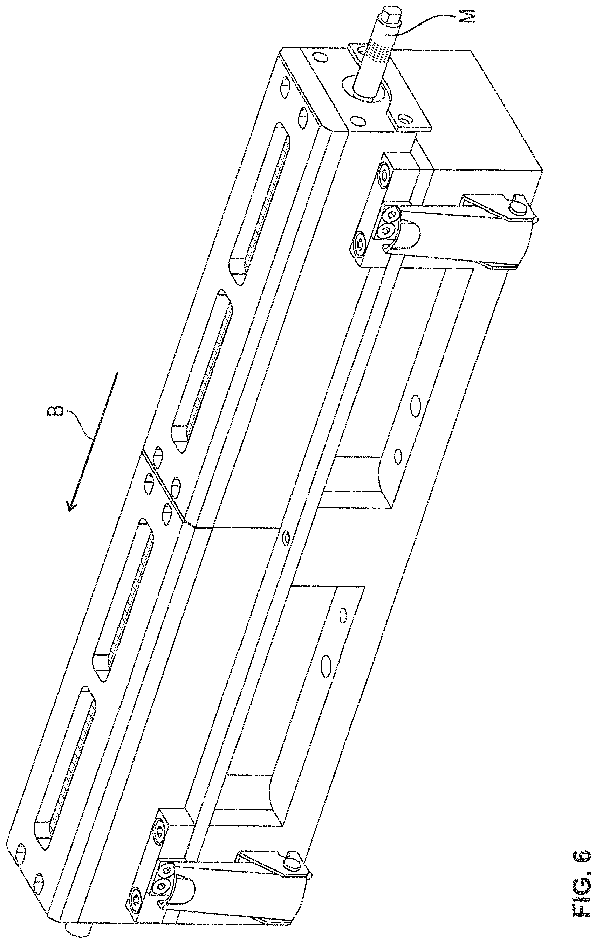

- Figur 2: eine Explosionsdarstellung des bevorzugten Kanalsegments gemäß Figur6,
- Figur 3: eine erste Querschnittsdarstellung durch das bevorzugte Kanalsegmentmit integrierter Medienzu- und -abführung,
- Figur 4: eine perspektivische Schnittdarstellung eines weiteren bevorzugten Kanalsegments, 1mit integrierter Medienzu- und -abführung,
- Figur 5: eine weitere Schnittdarstellung durch das bevorzugte Kanalsegment der Figur 1,
- Figur 6: eine perspektivische Ansicht eines weiteren bevorzugten modularen Kanalsegments mit darin geführten Massenteilen,
- Figur 7: ein Längsschnitt durch ein bevorzugtes Kanalsegment mit darin geführten Massenteilen,
- Figur 8: eine vergrößerte Darstellung eines Ausschnitts aus Figur 7,
- Figur 9: eine weiter vergrößerte Ansicht eines Ausschnitts aus Figur 8,
- Figur 10: eine Querschnittsdarstellung des bevorzugten Kanalsegments gemäß Figur 7,
- Figur 11: eine Querschnittsdarstellung eines bevorzugten Kanalsegments ähnlich dem Kanalsegment in Figur 7
- Figur 12: ein Längsschnitt durch eine weitere bevorzugte Ausführungsform eines Kanalsegments,
- Figur 13: ein weiterer Längsschnitt durch eine bevorzugte Ausführungsform des Kanalsegments,
- Figur 14: eine vergrößerte Darstellung eines Ausschnitts aus Figur 13,
- Figur 15: ein Längsschnitt durch eine bevorzugte Ausführungsform des Kanalsegments ähnlich dem in Figur 13, mit Zuströmgeometrie
- Figur 16: eine weitere Schnittdarstellung durch ein bevorzugtes Kanalsegment ähnlich dem in Figur 13, mit Zuströmgeometrie des Kanals unterhalb des Filters
- Figur 17: eine weitere Schnittdarstellung durch eine weitere bevorzugte Ausführungsform eines Kanalsegments ähnlich dem in Figur 13 als Ansicht von unten mit Abströmgeometrien des Reinigungskanals
- Figur 18: mehrere zusammengeschaltete modulare Kanalsegmente, die eine bevorzugte Durchlaufreinigungsanlage bilden,
- Figur 19: eine Darstellung mehrerer modularer Kanalsegmente einer bevorzugten Durchlaufreinigungsanlage und Darstellung eines außerhalb des Kanals liegenden Fördersystem,
- Figur 20: ein Flussdiagram einer bevorzugten Ausführungsform eines erfindungsgemäßen Reinigungsverfahrens,
- Figur 21: eine schematische Darstellung eines bevorzugten Querschnitts des Kanalinneren mit Auflageflächen für ein Massenteil,
- Figur 22: ein Blockschaltbild einer bevorzugten Ausführungsform der erfindungsgemäßen Durchlaufreinigungsanlage,
- Figur 23: eine schematische Darstellung einer bevorzugten Ausführungsform der erfindungsgemäßen Durchlaufreinigungsanlage mit Luft als Reinigungsmedium,
- Figur 24: eine schematische Darstellung einer bevorzugten Ausführungsform der erfindungsgemäßen Durchlaufreinigungsanlage mit erwärmter Luft als Reinigungsmedium,
- Figur 25: eine schematische Darstellung einer bevorzugten Ausführungsform der erfindungsgemäßen Durchlaufreinigungsanlage mit erwärmter Luft und gereinigter Umgebungsluft als Reinigungsmedium,
- Figur 26: eine Querschnittsansicht durch eine weitere bevorzugte Ausführungsform der erfindungsgemäßen Durchlaufreinigungsanlage,
- Figur 27: eine perspektivische Ansicht der in Fig. 26 dargestellten Ausführungsform und
- Figur 28: eine Frontansicht der in Fig. 26 dargestellten Ausführungsform.

### 5. Detaillierte Beschreibung der bevorzugten Ausführungsformen

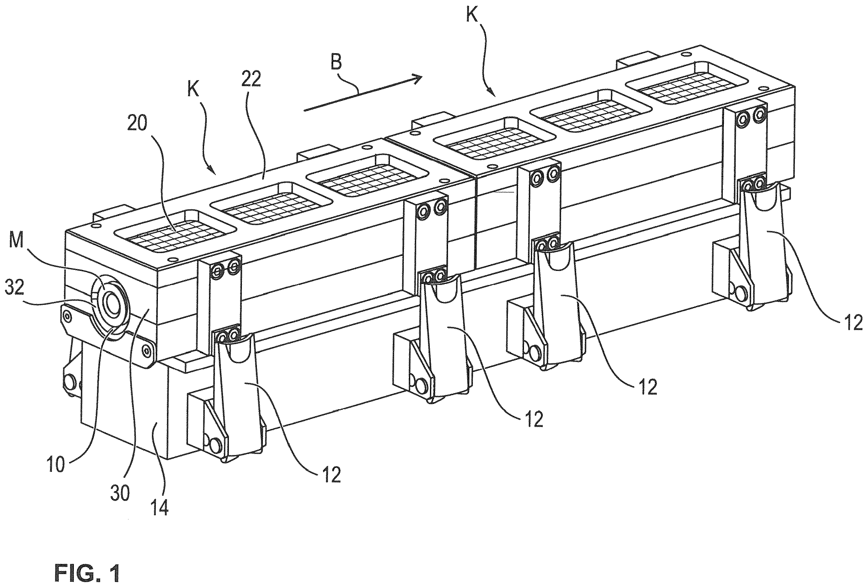

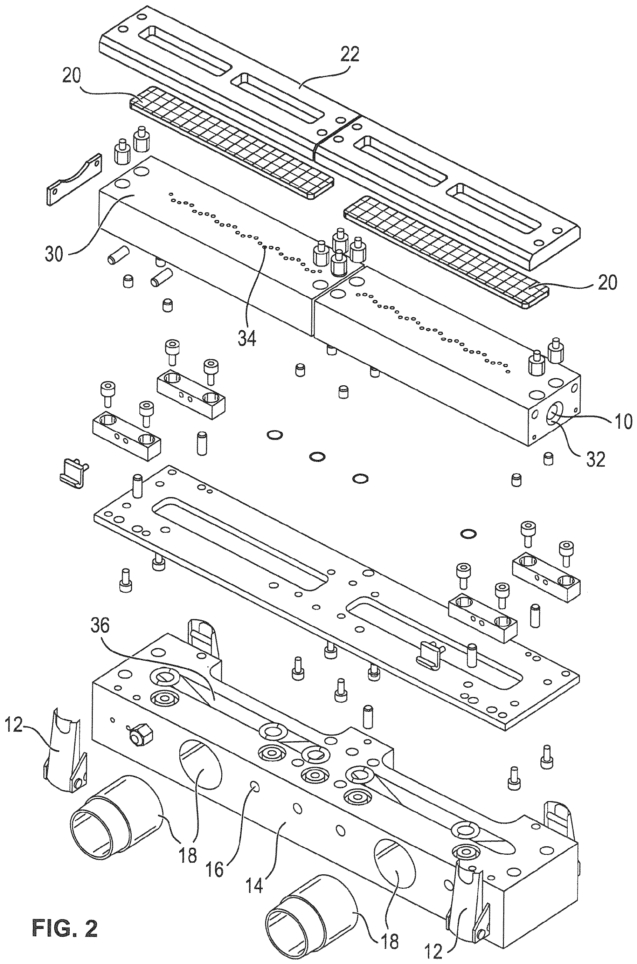

Die erfindungsgemäße Durchlaufreinigungsanlage umfasst mindestens ein erfindungsgemäßes modulares tunnelartiges Kanalsegment K. Eine Kombination von zwei bevorzugten Kanalsegmenten K ist in Figur 1 gezeigt. Figur 2 zeigt eine Explosionsdarstellung einer weiteren bevorzugten Ausführungsform des modularen Kanalsegments K. In der Durchlaufreinigungsanlage wird eine Mehrzahl von Massenteilen M in einer Bewegungsrichtung B durch ein Kanalinneres 10 mindestens eines modularen Kanalsegments K bewegt. Zu diesem Zweck sind die Massenteile M in Reihe hintereinander angeordnet. Eine Fördereinrichtung (nicht gezeigt) befindet sich außerhalb des Kanalinneren 10 und bewegt die Massenteile M in gegenseitiger Anlage benachbarter Massenteile M durch das Kanalinnere 10. Somit werden die Massenteile M mithilfe eines Zwangsvorschubs bewegt. Der Zwangsvorschub gewährleistet, dass die Fördereinrichtung außerhalb des Kanalinneren 10 angeordnet ist. Somit findet innerhalb des Kanalinneren 10 keine Verschleppung von Reinigungsmedien oder von der von den Massenteilen M abgetragenen Verschmutzung durch die Fördereinrichtung statt.

Die Massenteile werden vorzugsweise durch ein Handlingsystem mit Greif- oder Schiebeeinheit dem Kanal lagerichtig und positionsgenau zugeführt. Diese Systeme schieben die bereits zugeführten Massenteile in Bewegungsrichtung B weiter, während sie ein weiteres Massenteil M zuführen. Gemäß einer weiteren Ausführungsform werden außerhalb des mindestens einen Kanalinneren 10 angeordnete Einzugsysteme für Massenteile M verwendet. Diese umfassen einen oder mehrere konturangepasste Gurte, die an die Außenkontur der Massenteile angepasst sind, oder Förderbänder. Generell können alle Fördersysteme verwendet und angepasst werden, die das Werkstück in der vorgesehenen Zeit und mit der erforderlichen Präzision dem Kanalsegment K zuführen und durch dieses hindurch bewegen. Entsprechend sind ein einfaches Förderband, eine Highspeedzuführung mit bevorzugten Taktzeiten von bis zu 120 Massenteilen/Minute sowie ein Roboter mit gerichteter Massenteile-Zufuhr einsetzbar.

Die modularen tunnelartigen Kanalsegmente K werden über ein mechanisches Spannsystem 12 an einem Sockel 14 der Durchlaufreinigungsanlage befestigt. Das bevorzugte Spannsystem 12 erlaubt eine schnelles und mit geringem Aufwand verbundenes Installieren und Austauschen eines modularen Kanalsegments K.

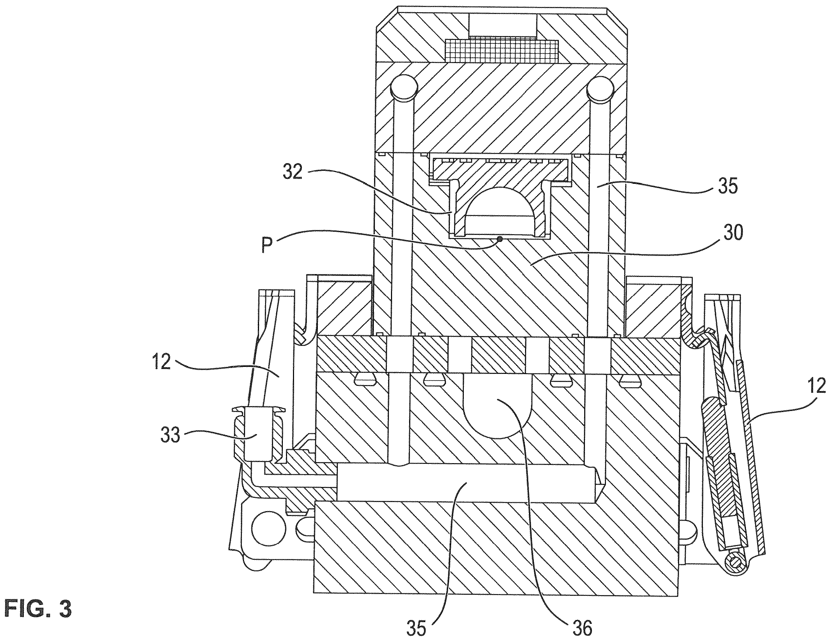

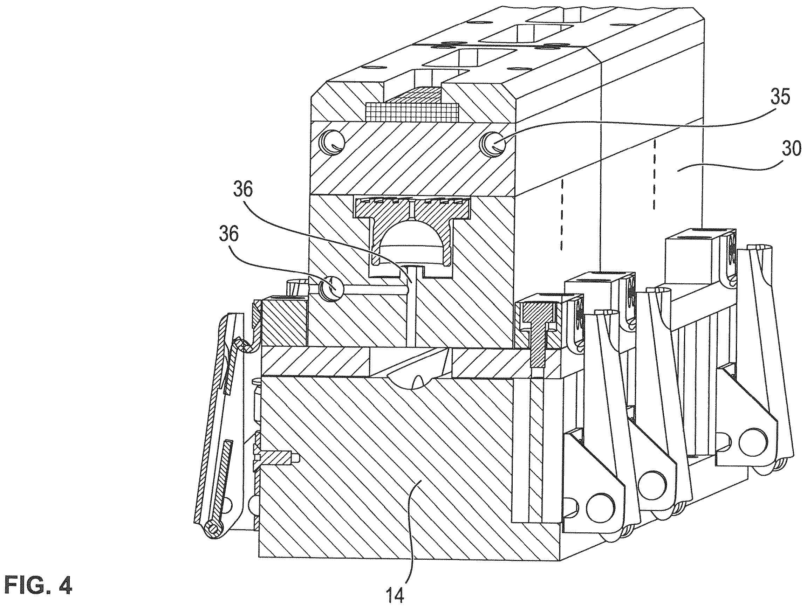

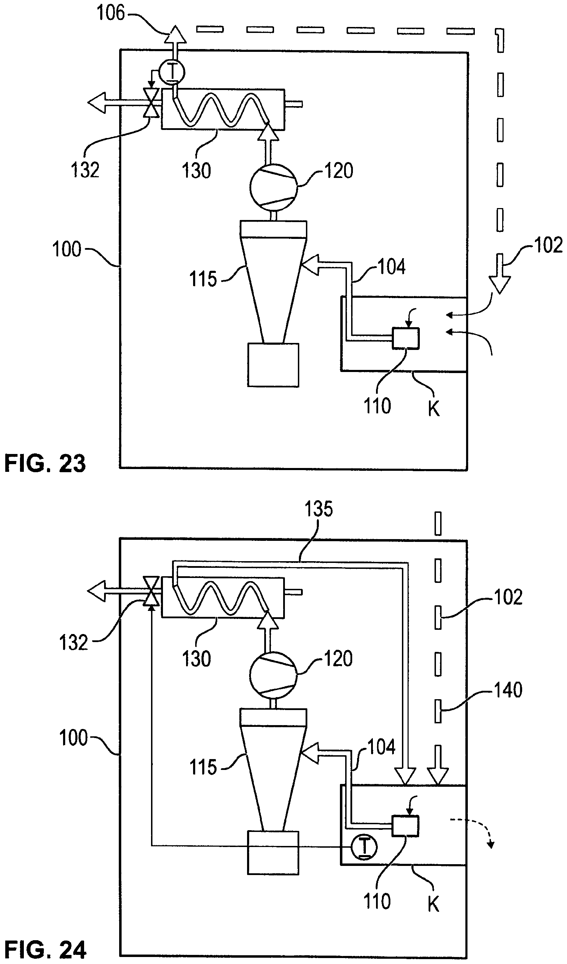

Einerseits über den Sockel 14 und dessen Konfiguration und andererseits über das Kanalsegment K selbst wird bevorzugt eine Zufuhr und Abfuhr von Luft und/oder von einem oder einer Mehrzahl von Reinigungsmedien realisiert. Neben Umgebungsluft, erwärmter und/oder entfeuchteter Luft werden als Reinigungsmedium Wasser, chemische Reinigungsflüssigkeit, Reinigungsgas oder andere dafür geeignete und bekannte Stoffe verstanden. Eine Ausführungsform mit Umgebungsluft und/oder erwärmter Luft als Reinigungsmedium wird später detailliert unter Bezugnahme auf die Figuren 23 bis 25 beschrieben. Wie man anhand von Figur 2 erkennen kann, ist der Sockel 14 von einer Mehrzahl von Medienleitungen 16 durchzogen. Diese Medienleitungen 16 sind über verschiedene Anschlüsse 18 mit Luft oder Reinigungsmedien versorgbar. So wird bevorzugt Umgebungsluft über mindestens einen Filter 20 in das Kanalinnere 10 und von dort über mindestens eine Medienleitung 16 und den Anschluss wieder aus den Kanalinneren 10 abgeführt. Dazu wird der Filter 20 über eine Halterung 22 an einem Kanalblock 30 gehalten. Der Kanalblock 30 stellt den Kanal 32 mit dem Kanalinneren 10 bereit. Die über den Filter 20 angesaugte Umgebungsluft gelangt über eine Mehrzahl von über den Kanal 32 verteilte Zufuhrleitungen 34 in das Kanalinnere 10. Die Zufuhrleitungen 34 sind vorzugsweise an der Seite des Kanalblocks 30 angeordnet, die dem Filter 20 zugewandt ist. An einer gegenüberliegenden Seite des Kanalblocks 30 ist eine Mehrzahl von Abfuhrleitungen 36 angeordnet, über die Luft und/oder ein Reinigungsmedium abführbar sind. Zufuhr- 34, 35 und Abfuhrleitungen 36 sind beispielsweise in den Figuren 3 und 4 in größerem Detail gezeigt.

Wie anhand von Figur 2 erkennbar ist, sind die Zufuhrleitungen 34 für Luft und 35 für Reinigungsmedien in bestimmten Mustern und/oder Gruppen bezogen auf das Kanalinnere 10 angeordnet. Durch diese Anordnung werden gezielt Geometriemerkmale der Massenteile M angeströmt und gereinigt. Zudem ist es bevorzugt, mit einer Mehrzahl quer zur Bewegungsrichtung B nebeneinander angeordneter Luftzufuhrleitungen 34 einen Luftvorhang im Kanalinneren 10 zu erzeugen.

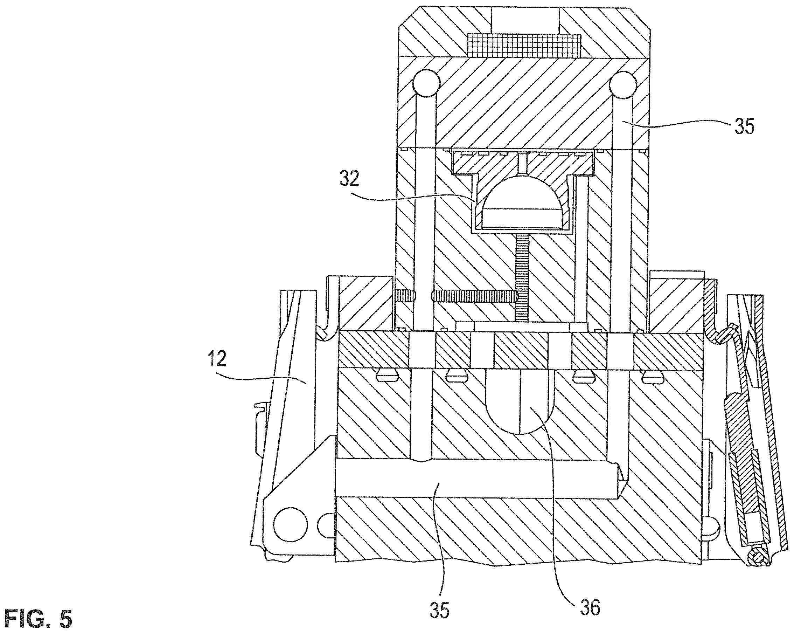

Der Kanal 32 ist in einer bevorzugten Ausgestaltung seiner Querschnittsform beispielsweise in den Figuren 3, 4, 5, 10, 11 und 12 gezeigt. In diesem Zusammenhang wird vorzugsweise die Querschnittsgestalt des Kanals 32 analog zu einer äußeren Querschnittsgestalt der Massenteile M geformt. Aufgrund der zu reinigenden Massenteile M ist der Kanalquerschnitt bevorzugt ≤ 50 cm² groß.

Das Kanalinnere 10 im tunnelartigen Kanalsegment ist vorzugsweise in seinem Querschnitt an eine äußere Form eines durch das Kanalinnere 10 zu bewegenden Massenteils M angepasst. Weist das Massenteil M beispielsweise einen C-, H-, L-förmigen, rechteckigen, mehreckigen, runden oder elliptischen Querschnitt auf, dann wird bevorzugt der Querschnitt des Kanalinneren 10 an die Querschnittsform des Massenteils M angepasst. Aufgrund dieser Anpassung ist ein Spalt zwischen der inneren Kanalwand und der Außenseite des Massenteils M reduzierbar und vorzugsweise minimierbar, um den Reinigungsaufwand und somit den Energie- und/oder Medienverbrauch der Durchlaufreinigungsanlage herabzusetzen. Vorzugsweise umfasst das Kanalinnere 10 eine maximale Querschnittsfläche senkrecht zur Längsachse des Kanals oder im Fall eines krummlinigen Kanals senkrecht zum Reinigungsweg W_{R} des Massenteils im Tunnel von maximal 50 cm², wie oben bereits erwähnt worden ist.

Mit der oben genannten Formanpassung des Kanalquerschnitts an die Geometrie der Massenteile M ist ein nur geringer Spalt zwischen innerer Kanalwand und Massenteil M realisierbar. Vorzugsweise ist der Kanalquerschnitt quer zur Bewegungsrichtung B ca. 2 bis 30 % größer als eine entsprechende Querschnittsfläche eines Massenteils M. Dieses Spaltmaß zwischen innerer Kanalwand und Massenteil M stellt sicher, dass die Massenteile M zur besseren Reinigung während ihrer Bewegung zur Bewegungsrichtung B verkippt angeordnet werden können. Dieses Verkippen erreicht aber vorzugsweise nie einen Winkel größer 40 ° zwischen der Längsachse eines Massenteils M und der Bewegungsrichtung B bzw. zwischen einer Stirnseite des Massenteils M und der Normalen zur Bewegungsrichtung B, so dass ein Blockieren des Kanalinneren 10 durch ein Massenteil M verhindert ist. Zudem wird dieses Verkippen in gleicher Weise durch einen krummlinigen Verlauf des Kanalinneren 10 oder durch im Kanalinneren 10 angeordnete Schikanen 50 erzielt (siehe unten).

Die Massenteile M werden in Bewegungsrichtung B über den Zwangsvorschub durch den Kanal 32 bewegt. Im Kanalinneren 10 werden mit der über den Filter 20 angesaugten Umgebungsluft die Massenteile M umspült und so Verschmutzungen über die Anschlüsse 18 mit der Luft von den Massenteiloberflächen abgesaugt. Wird zusätzlich oder abwechselnd dazu ein oder werden mehrere Reinigungsmedien dem Kanalinneren 10 zugeführt, werden die Massenteile M während ihrer Bewegung durch dieses Reinigungsmedien gereinigt.

Zur Unterstützung der Reinigung ist es bevorzugt, die Massenteile M im Kanalinneren 10 in Schwingungen zu versetzen. Gemäß einer bevorzugten Ausführungsform vorliegender Erfindung wird der Kanalblock 30 über den Sockel 14 in Schwingungen versetzt. Diese Schwingungen übertragen sich auf die Massenteile M, da diese im Kanalinneren 10 frei gelagert sind.

Die eingebrachten Schwingungen werden bevorzugt in einem Bereich von 20-600Hz und mit einer Amplitude von vorzugsweise ≤1,5 mm verwendet. In diesem Zusammenhang ist es ebenfalls bevorzugt, größere Amplituden oder andere Reinigungsfrequenzen einzusetzen, sofern dies die Reinigung je nach Kontur und Verschmutzungsgrad der Massenteile M unterstützt. Die Massenteile werden beim Durchlaufen des Kanalinneren 10 über die gesamte Länge des jeweiligen Kanalsegments in Schwingungen versetzt. Dabei ist es bevorzugt, in verschiedenen Kanalsegmenten auch mit unterschiedliche Schwingungsarten und/oder Frequenzen und/oder Amplituden zu nutzen.

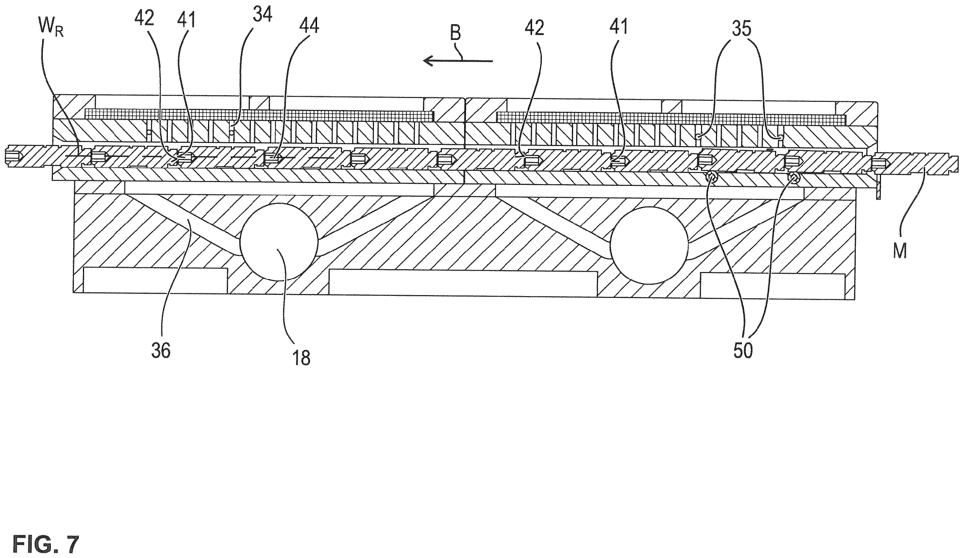

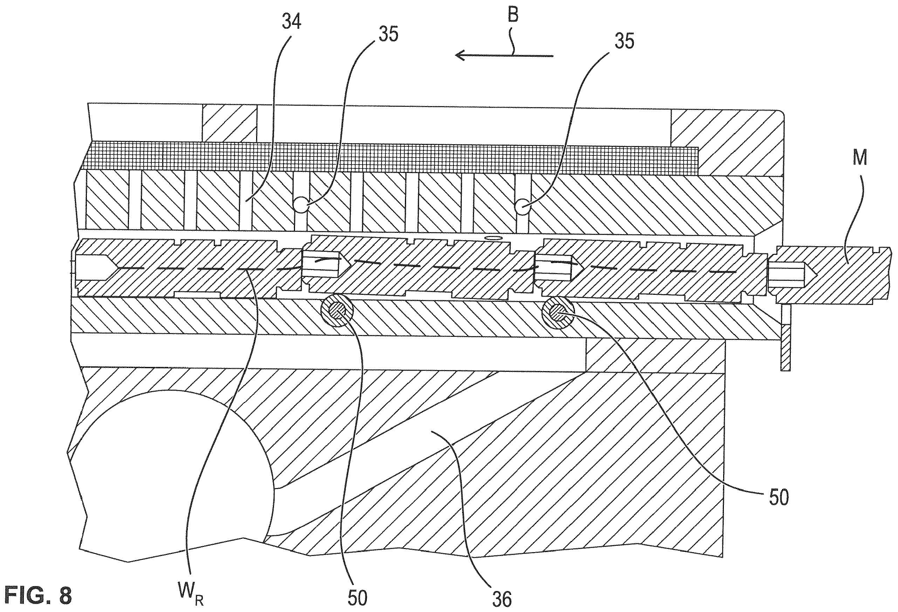

Um eine ausreichende Einwirkzeit der Reinigung durch Luft, andere Reinigungsmedien und Schwingungen allein oder in Kombination auf die Massenteile M zu gewährleisten, wird die Durchlaufgeschwindigkeit der Massenteile M durch das Kanalinnere 10 vorzugsweise in Bezug auf die Länge des Kanalinneren 10 eingestellt. In diesem Zusammenhang ist es bevorzugt, die Massenteile M kontinuierlich oder getaktet durch das Kanalinnere 10 zu bewegen. Bei einer kontinuierlichen Bewegung befinden sich bevorzugt die Massenteile M so lange im Kanalinneren 10, bis eine zufriedenstellende Reinigung erzielt worden ist. Bei einer getakteten Bewegung B der Massenteile M im Kanalinneren 10 ist es bevorzugt, die Bewegung der Massenteile 10 im Kanalinneren 10 zu stoppen, um die Reinigung zu unterstützen. Dabei werden einzelne Massenteile M bevorzugt in der Umgebung einer gezielt ausgewählten Luftzufuhröffnung 34 oder einer Medienzufuhröffnung 35 oder einer Luft- bzw. Medienabfuhröffnung 36 für eine ausgewählte Zeitspanne gestoppt (siehe Figuren 7 und 8). Auf diese Weise wir die Reinigung auf bestimmte Geometriemerkmale der einzelnen Massenteile M abgestimmt.

Die Medienzu- und -abfuhr über die Leitungen 34, 35, 36 im Kanalblock 30 ist gezielt einstellbar. Dazu wird vorzugsweise über ein Reinigungsmodul (nicht gezeigt) ein Reinigungsmedium über einen Anschluss 33 in die Zufuhrleitung 35 und darüber in das Kanalinnere 10 eingespeist. Die gezeigten Zufuhr-35 und Abfuhrleitungen 36 sind über eingebaute Ventile und/oder Drosseln in ihren Durchflusseigenschaften einstellbar. Derartige Ventile und/oder Drosseln verschließen vorzugsweise ganz oder teilweise bestimmte Leitungen oder sorgen für eine Unterbrechung oder Umleitung eines Mediums zu einer definierten Stelle im Kanalinneren 10. Zudem ist es bevorzugt, die Ventile und/oder Drosseln gezielt anzusteuern, vorzugsweise elektronisch, und dadurch zu öffnen, zu schließen und/oder zu verstellen.

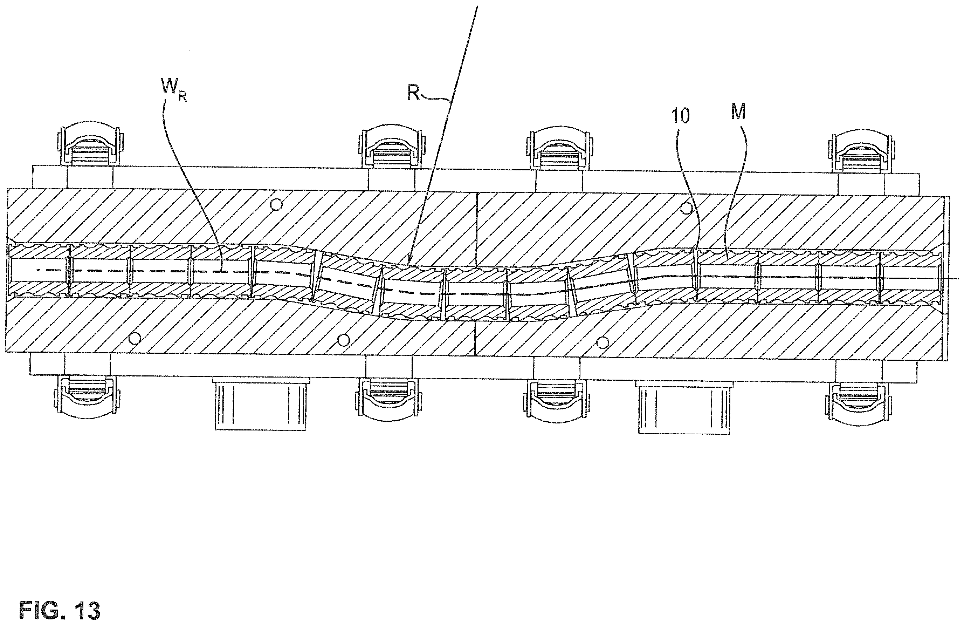

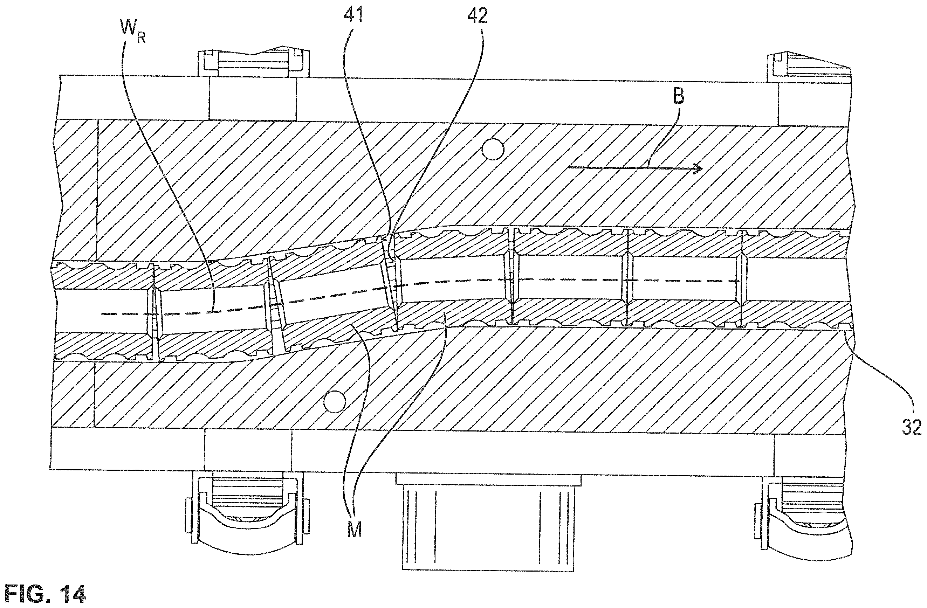

Die Figuren 7 bis 8 und 12 bis 14 illustrieren bevorzugte Ausführungsformen, wie der Zwangsvorschub die Massenteile M durch das Kanalinnere 10 bewegt. Bezogen auf die Bewegungsrichtung B liegen dabei die Stirnseiten 41, 42 benachbarter Massenteile M aneinander an, um die Massenteile M durch wechselseitige Abstützung durch das Kanalinnere 10 zu bewegen. Sofern das Kanalinnere 10 geradlinig verläuft, decken die aneinander anliegenden axialen Stirnseiten 41, 42 der Massenteile M sich gegenseitig ab. Hier bewegen sich die Massenteile M entlang eines geradlinigen Reinigungswegs W_{R} (siehe die gestrichelte Linie in Figur 7). Dadurch ist der Zugang für Luft und Reinigungsmedien zu den Stirnseiten 41, 42 und dort befindliche weitere Geometriemerkmale der Massenteile M, beispielsweise ein Sackloch 44, verhindert oder zumindest erschwert. Dadurch ist die Reinigung nur eingeschränkt möglich.

Daher ist es erfindungsgemäß bevorzugt, die Massenteile M mithilfe von mindestens einer, bevorzugt einer Mehrzahl von Schikanen 50 entlang eines zum Teil krummlinigen Reinigungswegs W_{R} im Kanalinneren 10 zu führen (siehe Figur 8).

Sofern sich das Kanalinnere 10 geradlinig störungsfrei erstreckt, stützen sich benachbarte Massenteile M flächig an ihren axialen Stirnseiten 41, 42 gegenseitig ab. Entsprechend folgen die Massenteile M einem näherungsweise geradlinigen Reinigungsweg W_{R} im Kanalinneren 10. Um die abgedeckten Stirnseiten 41, 42 und weitere dort angeordnete Geometriemerkmale 44 der Reinigung zugänglich zu machen, ist es erfindungsgemäß bevorzugt, mindestens eine Schikane 50, vorzugsweise eine Mehrzahl von Schikanen 50, im Kanalinneren 10 anzuordnen. Die Schikanen 50 sind bevorzugt an der inneren Kanalwand angeordnet, sodass sie in das Kanalinnere 10 hineinragen. Bevorzugt verengt eine Schikane 50 eine Kanalbreite senkrecht zur Bewegungsrichtung B um bis zu 50 %, vorzugsweise um bis zu 10 % bis 30 %. Weiter bevorzugt sind die Schikanen 50, 50`, 50" bezogen auf den Querschnitt des Kanals 32 in einem Winkelbereich β um die Kanalmitte angeordnet, der sich über bevorzugt β = 270 °, weiter bevorzugt β = 180 ° erstreckt. Dabei bildet die Kanalunterseite, auf die die Gewichtskraft der Massenteile M maximal wirkt, die Winkelhalbierende des angegebenen Winkels β. Im Falle eines Kanals 32 mit rundem Querschnitt ist dies der tiefste dem Sockel 14 zugewandte Punkt P. Bei einem Kanal 32 mit rechteckigem Querschnitt befindet sich dieser Punkt P ebenfalls am Boden des Kanals 32 (siehe Fig. 3).

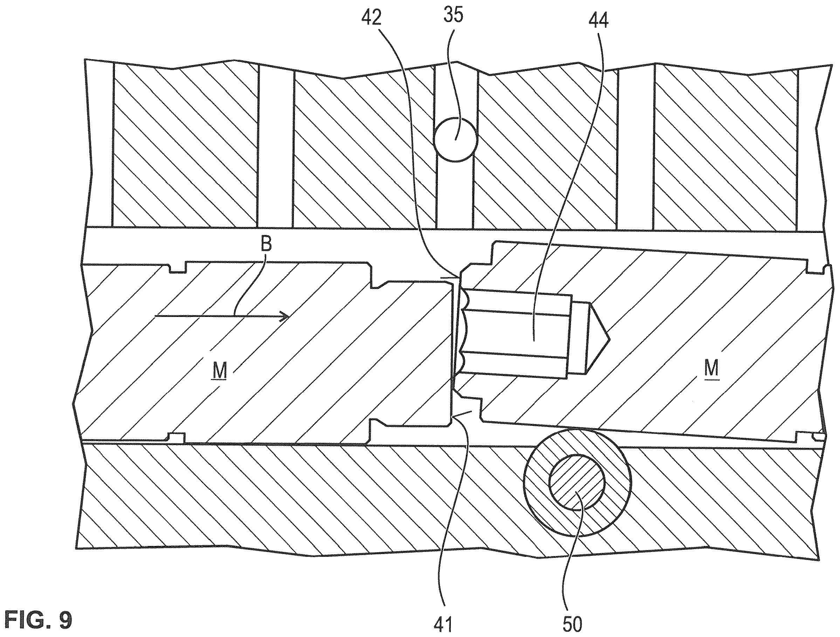

Wie man anhand der Fig. 9 erkennen kann, ragt die Schikane 50 ins Kanalinnere 10 und lenkt die Massenteile M vom geradlinigen Reinigungsweg W_{R} ab auf einen krummlinigen Reinigungsweg W_{R}. Dies führt zu einem zeitweisen Verkippen benachbarter Massenteile M in Bezug zueinander. Dadurch werden die Stirnseiten 41, 42 ebenfalls gegeneinander verkippt und aus der gegenseitigen Anlage gelöst. Dieses Verkippen ermöglicht den Zugang von Luft und/oder einem Reinigungsmedium zu den Stirnseiten 41, 42 und zum Sackloch 44. Das Reinigungsmedium wird dazu bevorzugt über die Zuführleitung 35 zugeführt. Die Zuführleitung 35 mündet dazu benachbart zur Schikane 50 in das Kanalinnere 10.

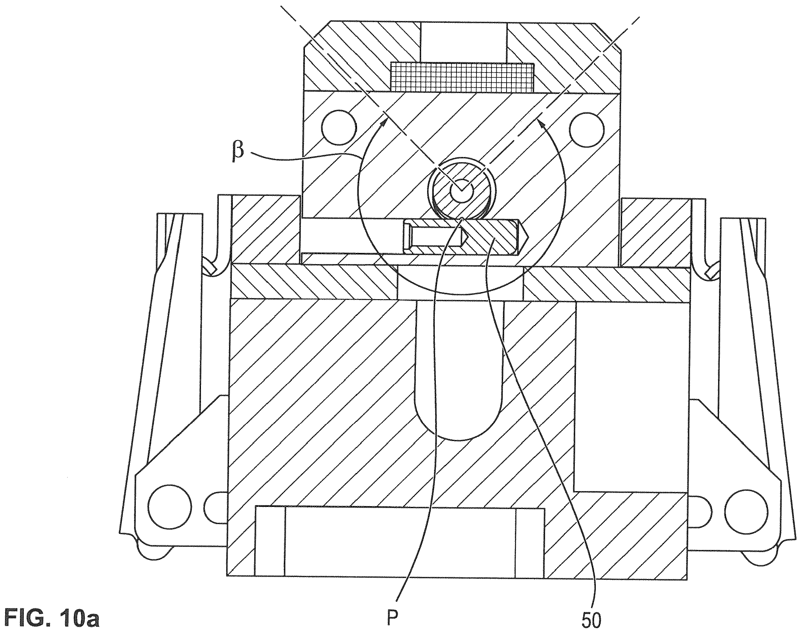

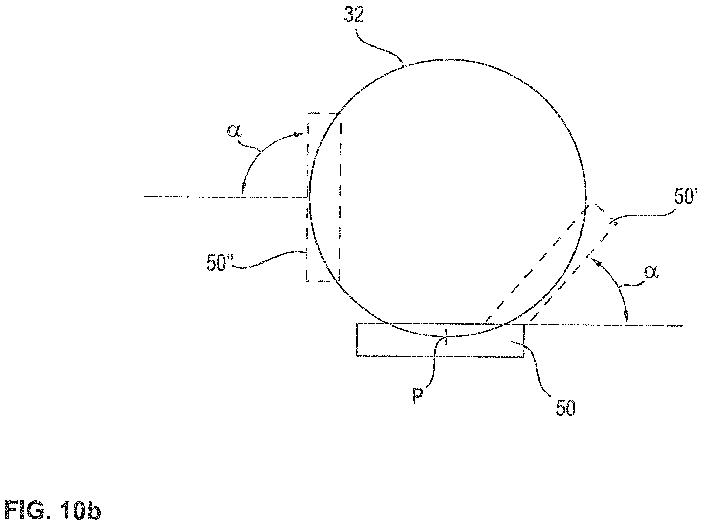

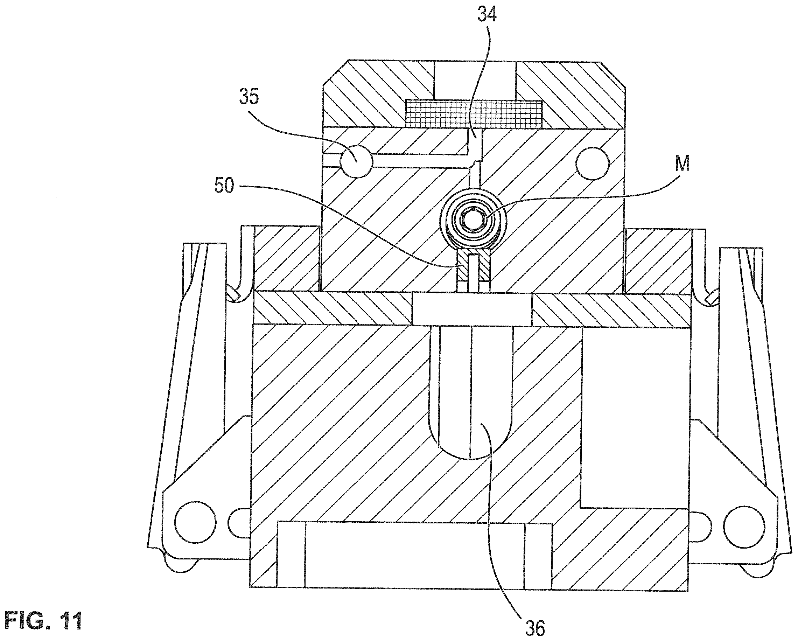

Erfindungsgemäß bevorzugt sind mehrere Schikanen 50 gleichmäßig beabstandet an der dem Sockel 14 zugewandten Innenseite des Kanals 32 angeordnet. Weiterhin bevorzugt sind die Schikanen 50, 50', 50" in dem Winkelbereich β senkrecht zur Bewegungsrichtung B mit einer Neigung α im Bereich von 0° < α ≤ 90 °, vorzugsweise 20° ≤ α ≤ 90 °, bezogen auf den tiefsten Punkt P bzw. die Tangente im tiefsten Punkt P des Kanals 32 angeordnet. Dies ist bevorzugt in Fig. 10b veranschaulicht. Dabei kann die Schikane 50` als Sekante oder als radialer Vorsprung (siehe Figur 11) das Kanalinnere 10 verkleinern und dadurch einen krummlinigen Reinigungsweg W_{R} erzeugen.

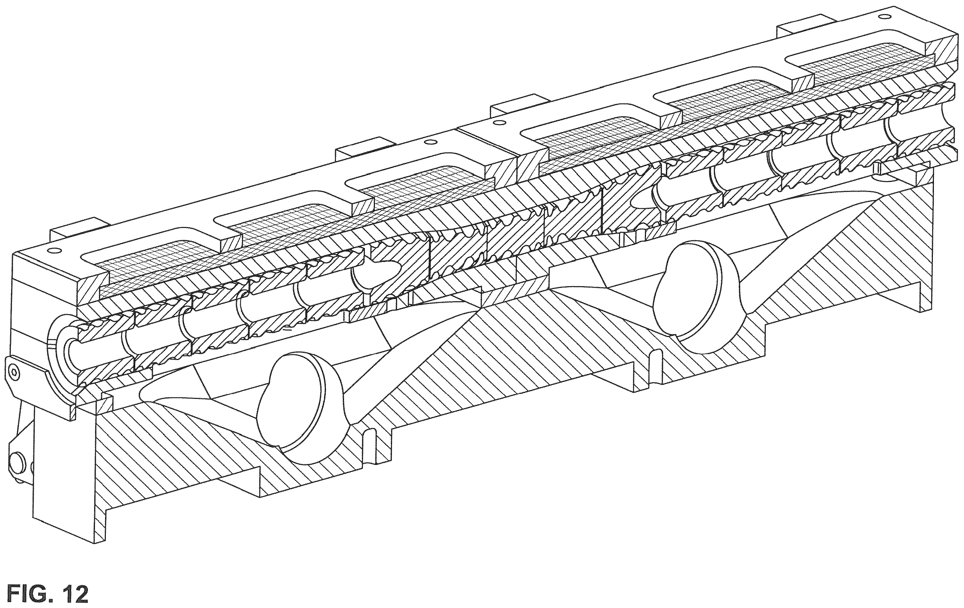

Gemäß einer weiteren bevorzugten Ausführungsform vorliegender Erfindung ist der Kanal 32 krummlinig geformt, wie es die Fig. 12-14 zeigen. Der Verlauf des Kanalinneren 10 folgt einem bevorzugten Krümmungsradius R, der die benachbarten Stirnseiten 41, 42 aus ihrer Anlage löst. Insofern gilt für den erzielten Effekt das bereits oben in Bezug auf die Schikanen 50 gesagte.

Vorzugsweise hat der krummlinige Verlauf des Kanalinneren 10 einen Krümmungsradius R im Bereich von 2 bis 3-facher Länge eines Massenteils M. Der Krümmungsradius kann jedoch je nach Gestaltung der Massenteile M größer oder kleiner ausfallen, wenn es die Geometrie der Massenteile M erfordert. Dadurch wird bevorzugt ein Klemmen der Massenteile M im Kanalinneren 10 vermieden und/oder ein bevorzugter Öffnungswinkel von ≤40 ° zwischen den Stirnseiten benachbarter Massenteile M erzeugt.

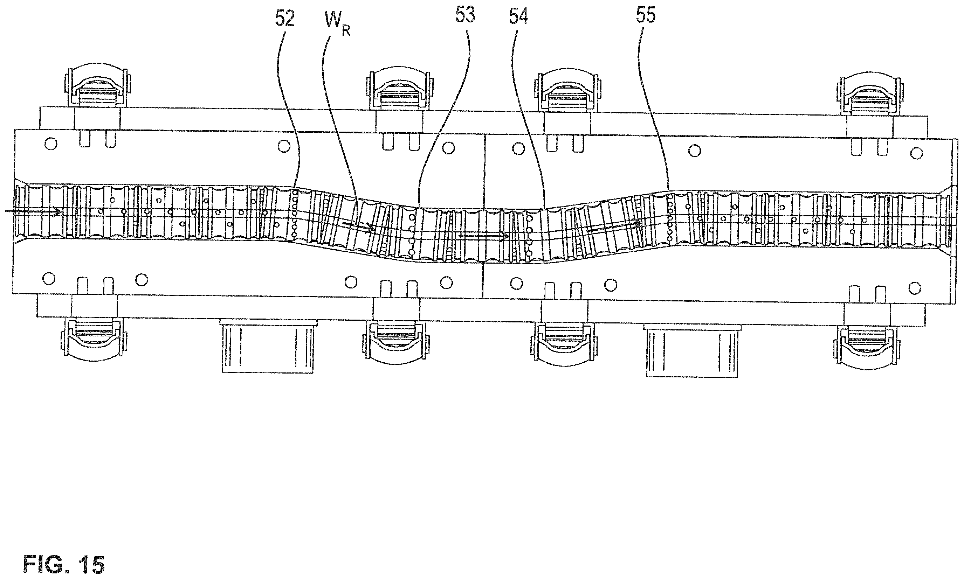

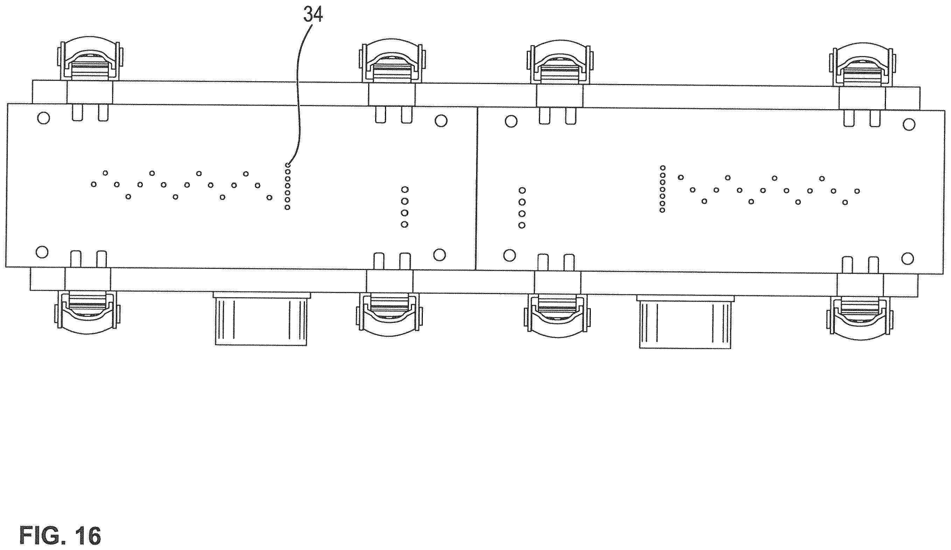

Wie man anhand von Fig. 15 und 16 erkennen kann, wird Umgebungsluft gerade an den Positionen in das Kanalinnere 10 und über die Oberflächen der Massenteile M gesaugt, wo ein geradliniger Abschnitt des Kanals 32 in einen krummlinigen Abschnitt des Kanals 32 übergeht. Denn gerade in diesem Bereich einer Richtungsänderung des Reinigungswegs W_{R} an den Stellen 52, 53, 54 sind die Stirnflächen 41, 42 um einen bestimmten Öffnungswinkel (siehe oben) geöffnet, damit frei und höchstens in punktueller Anlage miteinander. An diesen Stellen 52, 53, 54 sind bevorzugt mehrere Luftzufuhröffnungen quer zur Bewegungsrichtung B angeordnet. Damit saugen sie bevorzugt den winkligen Spalt zwischen den Stirnseiten 41, 42 ab. Es ist ebenfalls bevorzugt, den krummlinigen Verlauf in jeder beliebigen Raumebene anzuordnen. Durch eine Anordnung von Eintritts- und Auslassöffnungen für das mindestens eine Reinigungsmedien im Verlauf des krummlinigen Kanalinneren 10, bevorzugt in einem Wendebereich, wird auch ein Durchströmen und Reinigen von Bohrungen oder Geometriemerkmalen der Massenteile M in deren Bauteilinnerem erreicht. Damit können entsprechend Durchgangs- oder Sackbohrungen, Einstiche oder andere Innenquerschnitte der Massenteile M auch mit Hinterschnitten im Kanalinneren 10 gereinigt werden.

Die Gestaltung von Auflageflächen des Massenteils M auf einer Wand des Kanalinneren 10 hat einen weiteren Einfluss auf die Reinigungsqualität und beginnt bereits bei der Führung und Förderung des Massenteils M vor dem eigentlichen Reinigungskanal. Die Größe der kontaktierenden Fläche zwischen Massenteil M und Auflagefläche ist ein Maß für a) nicht für die Reinigung zugängliche Flächen, welche ggf. erst durch Vibration zugänglich gemacht werden müssen, b) Verschleppung von Schmutz in Bewegungsrichtung und in das Kanalinnere, und c) Erzeugung von nachteiligen Reibungskräften, die durch die Fördereinrichtung überwunden werden müssen. Werden beispielsweise Ringe auf der Stirnfläche liegend durch das Kanalinnere bewegt oder geschoben und ist der Kanalboden bevorzugt plan ausgeführt, so führt eine Verschmutzung mit Öl zu den o.g. Problemen.

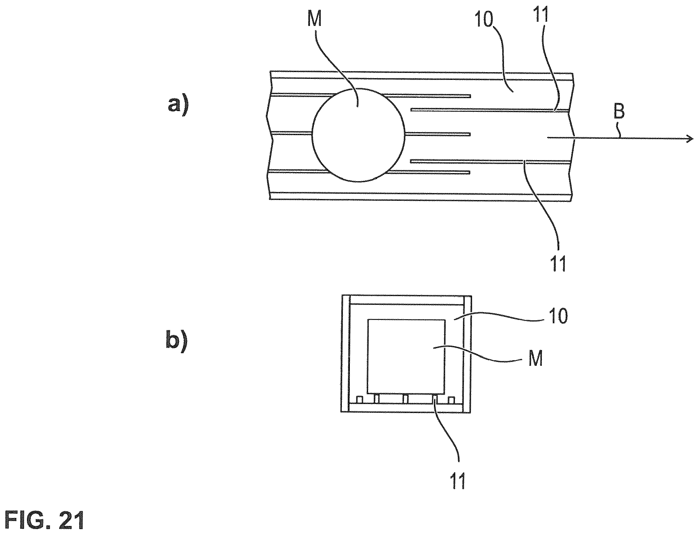

Eine Lösung besteht darin, die Auflagefläche zwischen Massenteil M und Kanalinnenwand soweit zu verringern, dass eine verlässliche Bewegung des Massenteils durch das Kanalinnere noch gegeben ist. Zudem ist es bevorzugt, die Auflagefläche im Verlauf der Bewegung des Massenteils M durch das Kanalinnere 10 entlang des Reinigungswegs zu verändern, um den Zugang des Reinigungsmediums, wie Luft und/oder Flüssigkeit, zu möglichst allen Flächen des Massenteils zu ermöglichen. Daher werden die Massenteile M bevorzugt auf der Kanalinnenwand, auf der sie während ihrer Bewegung entlang des Reinigungswegs aufliegen und/oder an der sie anliegen mit Hilfe von Auflagestegen 11 geführt (siehe Figuren 21 a, b). Diese Auflagestege 11 ragen in das Kanalinnere 10. Im Kanalinneren 10 verlaufen sie in Bewegungsrichtung der Massenteile M kontinuierlich oder abschnittsweise unterbrochen. Durch diese Unterbrechungen der sonst kontinuierlich verlaufenden Auflagestege 11 werden Auflageflächen des Massenteils zur Reinigung freigegeben. Weiterhin bevorzugt verlaufen die Auflagestege zumindest abschnittsweise im Kanalinneren in einem spitzen Winkel zur Bewegungsrichtung oder zum Reinigungsweg der Massenteile. Durch diesen schrägen Verlauf werden die Massenteile im Kanalinneren bevorzugt gedreht oder um eine Längsachse versetzt, um möglichst alle Oberflächenbereiche des Massenteils der Reinigung zugänglich zu machen. Des Weiteren ist es bevorzugt, mit Hilfe der Auflagestege eine bezogen auf den Querschnitt des Massenteils asymmetrische Reibung zu erzeugen. Diese asymmetrische Reibung erzeugt in Verbindung mit dem Zwangsvorschub eine Drehung des Massenteils, um die Reinigung zu unterstützen. Eine derartige Massenteilrotation wird vorzugsweise auch durch gezielte Strömungsmechanik im Kanalinneren erzeugt.

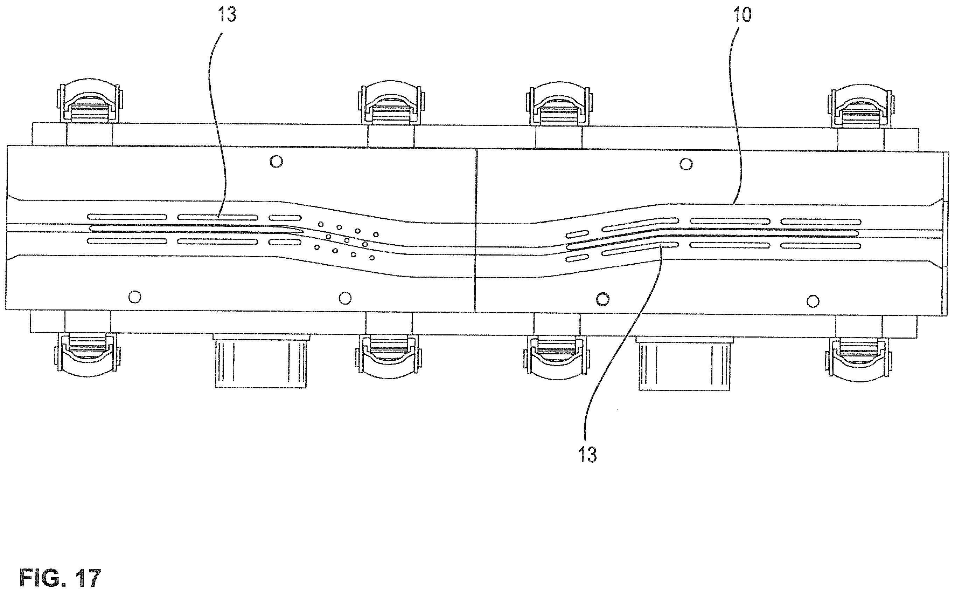

Des Weiteren ist es bevorzugt, die Auflage bzw. den Kontakt zwischen Massenteil M und Kanalinnerem 10 anstelle von Auflagestegen mit Hilfe von Löchern, Langlöchern 13, Nuten und allgemein Vertiefungen zu verändern. Dies ist gemäß einer bevorzugten Ausführungsform in Figur 17 dargestellt. Figur 17 zeigt eine Ansicht verbundener Kanalsegmente K von unten. Im Boden des Kanalsegments K sind mehrere Langlöcher angeordnet, die ebenfalls eine stegartige Auflage für das Massenteil M im Kanalinneren 10 bilden. Diese Langlöcher 13 erzeugen mit einer bevorzugt winkligen Anordnung unter Bezug auf die Bewegungsrichtung B ein Moment im Massenteil M, so dass dieses während seiner Bewegung im Kanalinneren 10 gedreht wird. Diese konstruktive Gestaltung der Langlöcher verändert ebenfalls die Größe der Kontaktfläche zwischen Massenteil M und innerer Kanalwand, wodurch dieselben Effekte wie mit den oben beschriebenen Auflagestegen erzielt werden. Zudem ist es möglich, über derartige Öffnungen Luft oder Reinigungsmedien auf das Massenteil M zu leiten.

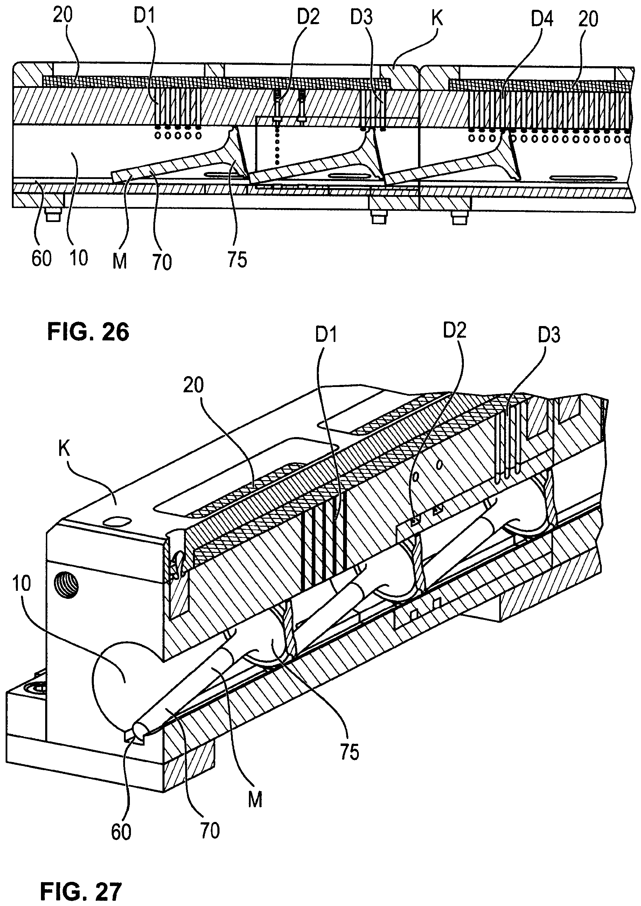

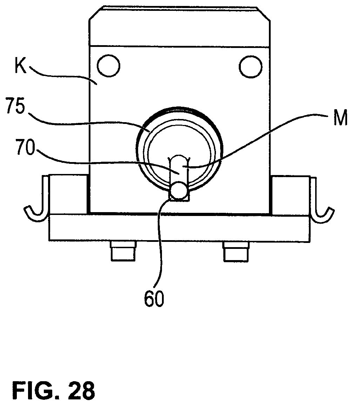

In einer weiteren in den Figuren 26 bis 28 dargestellten bevorzugten Ausführungsform weist das Kanalsegment K eine Aussparung 60 auf. Bezüglich des allgemeinen Aufbaus des Kanalsegments K wird auch auf die Beschreibung der weiteren Ausführungsformen des Kanalsegments K verwiesen. Hierbei sind einzelnen Merkmale der verschiedenen Ausführungsformen miteinander kombinierbar. Mittels der Aussparung 60 sind beispielsweise zu reinigende zylindrische Werkstücke als Massenteil M bestehend aus einem Schaft 70 und einem Kopf bzw. Teller 75 mit unterschiedlichem Durchmesser besonders vorteilhaft im Kanalinneren 10 führbar. Bei den zu reinigenden Werkstücken handelt es sich beispielsweise um Ventilstößel, Schrauben, Nägel, Niete und dergleichen.

Die Aussparung 60 ist an einen Schaftdurchmesser der zu reinigenden Werkstücke angepasst, wohingegen das Kanalinnere 10 insgesamt an einen Kopf- bzw. Tellerdurchmesser angepasst ist. Die Aussparung 60 kann sich vorteilhafterweise über das gesamte Kanalsegment K erstrecken oder nur in Teilabschnitten vorliegen. Beispielsweise kann zu Beginn und am Ende der Aussparung eine rampenähnliche Struktur vorgesehen sein, um den Schaft 70 in und aus der Aussparung 60 heraus zu führen.

Mittels der Aussparung 60 ist die Kontaktfläche von zwei benachbarten und aneinander angrenzenden zu reinigenden Werkstücken an den Stirnseiten weiter minimierbar, insbesondere im Vergleich zu einer Ausgestaltung ohne Aussparung 60. Dadurch wird die direkt für eine Reinigung zugängliche Fläche weiter vergrößert.

Wie in der Ausführungsform der Figuren 26 bis 28 ebenfalls erkennbar ist, sind verschiedene Düsengruppen D1 bis D4 vorgesehen. Über die Düsengruppen D1 und D3, die jeweils eine Mehrzahl von in Förderrichtung der zu reinigenden Werkstücke nebeneinander angeordneten Düsen umfassen, die sich in umfänglicher Richtung beispielsweise nur über einen Teilbereich des Kanalinneren 10 erstrecken, wird Luft zugeführt. Bevor die Luft in das Kanalinnere 10 gelangt, wird sie über einen Filter 20 geleitet, wie oben beschrieben. Bei der zugeführten Luft kann es sich um Umgebungsluft oder bevorzugt um erwärmte Luft handeln, wie in Zusammenhang mit der Ausführungsform gemäß den Figuren 23 bis 25 beschrieben. Besonders bevorzugt handelt es sich um bereits gereinigte Luft, unabhängig davon, ob die Luft bereits erwärmt oder bei Umgebungstemperatur vorliegt.

Mittels der Düsengruppe D2 wird insbesondere ein flüssiges Reinigungsmedium zugeführt. Die Düsengruppe D2 umfasst ebenfalls eine Mehrzahl von in Förderrichtung der zu reinigenden Werkstücke nebeneinander angeordneten Düsen. Im Unterschied zu den Düsen der Düsengruppen D1 und D3 sind die Düsen der Düsengruppe D2 entlang des gesamten Umfangs des Kanalinneren 10 vorgesehen.

Über die Düsen der Düsengruppe D4 wird schließlich erneut Luft zugeführt, vorzugsweise gefilterte Umgebungsluft zur Kühlung des zu reinigenden Werkstücks bzw. Massenteils M. Besonders bevorzugt ist es, wenn die zugeführte Luft gekühlt ist, so dass das zu reinigende Massenteil M mit Luft umströmt wird, die eine Temperatur unterhalb der Temperatur der Umgebungsluft aufweist. Auf diese Weise können die zu reinigenden Massenteile M gezielt gekühlt werden, so dass diese im Anschluss an das Reinigungsverfahren direkt weiter verarbeitet werden können. Sofern eine bestimmte Endtemperatur des Massenteils nach der Reinigung nicht von Bedeutung ist, kann ebenfalls erwärmte Luft über die Düsen der Düsengruppe D4 zugeführt werden, was einen Trocknungsprozess verbessert. Die Düsengruppe D4 ist analog zu den Düsengruppen D1 und D3 aufgebaut, verfügt jedoch in Förderrichtung der Massenteile M über mehr nebeneinander angeordnete Düsen als die Düsengruppen D1 und D3.

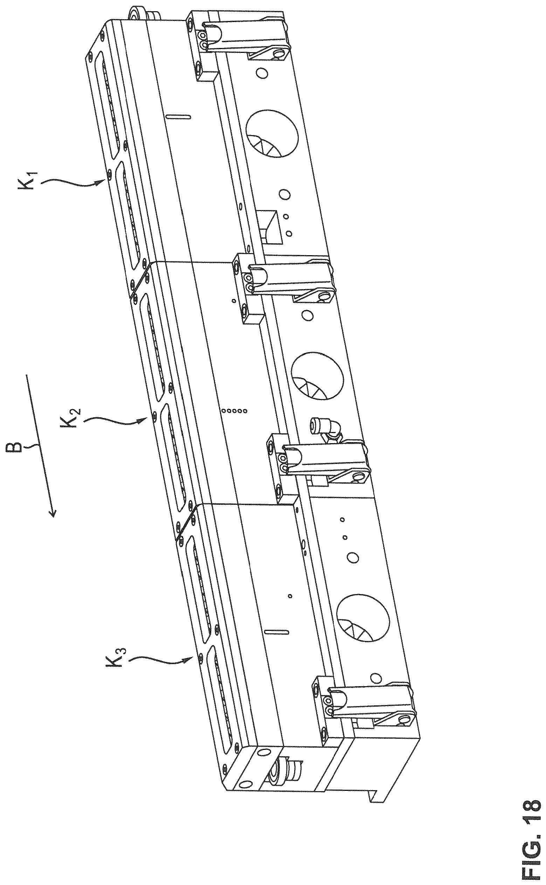

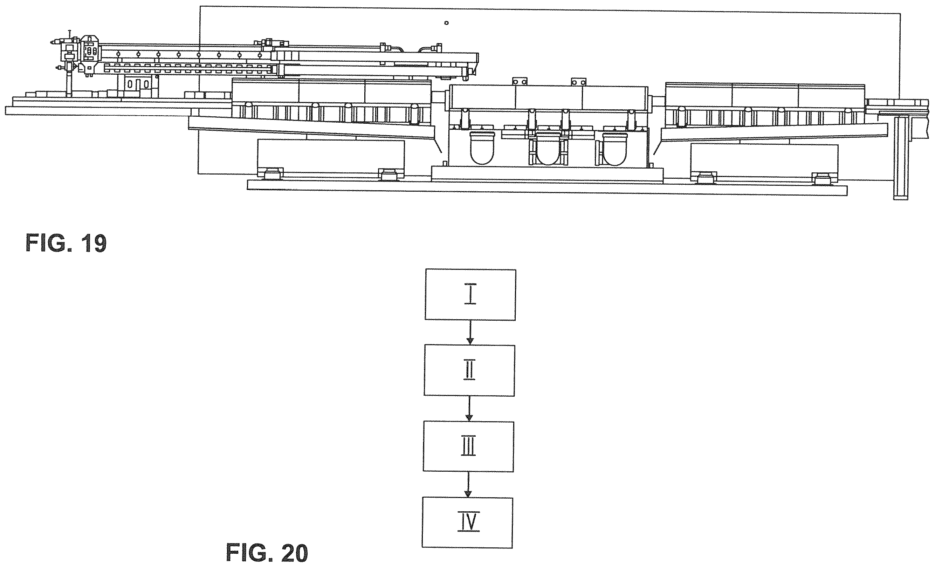

Die Fig. 18 und 19 zeigen die bevorzugte Kombination mehrerer Kanalsegmente K zu einer Reinigungszone. Gemäß einer Ausführungsform bilden jeweils drei Kanalsegmente eine Reinigungszone, in der nur mit einem bestimmten Reinigungsmedium oder mit Reinigungsmedium und Vibration oder nur mit Luft oder mit Luft und Vibration die das Massenteil M gereinigt werden. Diese Reinigungszonen sind vorzugsweise gemäß den oben beschriebenen Konstruktionsalternativen der Kanalsegmente K aufgebaut.

Bei dem in Figur 18 dargestellten Kanal einer Durchlaufreinigungsanlage handelt es sich um einen Kanal mit drei Kanalsegmenten K₁, K₂ und K₃. Im ersten Kanalsegment K₁ in Bewegungsrichtung B wird ein Bearbeitungsmedium des letzten Bearbeitungsprozess, beispielsweise ein Kühlmittel eines Fräsprozesses, von den Massenteilen M abgereinigt und abgeführt. Nach der Abfuhr aus dem Kanalinneren 10 findet bevorzugt eine Aufbereitung der zur Reinigung eingesetzten Luft oder des Reinigungsmediums statt. Im zweiten Kanalsegment K₂ werden vorzugsweise mit einem anderen Reinigungsmedium im Vergleich zum Kanalsegment K₁ verbleibende Rückstände abgereinigt. Dabei wird bevorzugt verhindert, dass das Reinigungsmedium des jeweiligen Kanalsegments K₁, K₂ in das jeweils andere Kanalsegment K₁, K₂ verschleppt wird. Im dritten Kanalsegment K₃ werden dann bevorzugt die Massenteile M vom anhaftenden Reinigungsmedium getrocknet.

In Figur 19 handelt es sich ebenfalls um eine Anordnung von drei Kanalsegmenten K₁, K₂, K₃ wie in Figur 18 beschrieben. Hier wird im Kanalsegment K₁, wie oben beschrieben, der Bearbeitungshilfsstoff abgereinigt. Im Kanalsegment K₂ werden mit einem Reinigungsfluid die Rückstände, bspw. Partikel und fluidische Verunreinigungen, abgereinigt. Im Segment K₃ erfolgt eine Trocknung. Im Kanalsegment K₂ kann zudem bevorzugt eine weitere Nachbehandlung der Massenteile M, wie das Entfernen von Rückständen des Reinigungsfluids mit Hilfe eines Spülmediums und ein anschließendes Trocknen in den Kanalsegmenten K₁ und K₂ erfolgen. Im Kanalsegment K₃ erfolgt bevorzugt eine spezielle Nachbehandlung, wie bspw. das Auftragen einer Konservierung, und in den Kanalsegmenten K₂ und K₃ das Reduzieren des Konservierungsfilms auf ein gewünschtes und benötigtes Maß, wie bspw. trocken, tropffrei benetzt oder nebelfeucht.

Um ein Verschleppen von Medien in ein anderes Kanalsegment K bzw. in eine andere Reinigungszone zu verhindern, wird mit Sperrluft, Drucksenken oder Luftvorhängen oder mit mechanischen Abgrenzungen zwischen den Kanalsegmenten K gearbeitet. Ein Luftvorhang oder eine Sperrluft im Kanalinneren 10 wird durch mehrere eng beieinanderliegende Luftzufuhröffnungen 34 oder durch Luftzufuhröffnungen 34 größeren Querschnitts erzeugt. Durch diese Anordnung ist ein größerer Volumenstrom als in den für die Reinigung bestimmten Luftzufuhröffnungen 34 erzielbar. Zudem werden die Luftzufuhröffnungen 34 für den Luftvorhang benachbart zu Absaugöffnungen bzw. Drucksenken angeordnet. Dadurch erzielt man kurze Luftwege zur Drucksenke und einen geringen Strömungswiderstand, was die Wirkung des Luftvorhangs unterstützt. Auf diese Weise wird ein vergleichsweise großer Volumenstrom generiert, der aufgrund seiner Strömungsleistung in Längsrichtung des Kanalinneren 10 spritzendendes oder fließendes Medium erfasst und abführt, bevor es in einen ungewünschten Bereich des Kanalinneren 10 oder der Durchlaufreinigungsanlage gelangt.

Gemäß einer bevorzugten Ausführungsform der Durchlaufreinigungsanlage werden in einer ersten Trocken-Prozess-Zone Bearbeitungsrückstände von den Massenteilen M entfernt. Dies erfolgt über die Zufuhr von Luft und Vibration der zu dieser Reinigungszone gehörenden Kanalsegmente K. Entsprechend lösen die Vibrationen die Verschmutzungen von der Oberfläche der Massenteile M, sodass diese nachfolgend mithilfe des Luftstroms von Umgebungsluft abgesaugt werden können.

In einer weiteren, vorzugsweise darauffolgenden, Nass-Prozess-Zone werden weitere Bearbeitungsrückstände auf den Oberflächen der Massenteile M mithilfe eines nass-chemischen-Prozesses entfernt. Hier dienen bspw. die Zufuhrleitungen 34 dazu, gezielt ein flüssiges Reinigungsmedium oder mehrere flüssige Reinigungsmedien auf die Oberfläche der Massenteile M aufzubringen. Damit werden in dieser Reinigungszone praktisch die Oberflächen der Massenteile M von Bearbeitungsrückständen freigespült.

In einer weiteren und bevorzugt folgenden Reinigungszone erfolgt ein Trocken-Prozess. Hier werden bevorzugt Rückstände des zuvor verwendeten Reinigungsmediums mithilfe von Luft und/oder Schwingungen von der Oberfläche der Massenteile M entfernt. Zudem dient ein über die Oberfläche der Massenteile M sich bewegender Luftstrom zum Trocknen der Massenteile M.

Eine bevorzugte Ausführungsform des Reinigungsverfahrens ist in dem Flussdiagramm der Fig. 20 veranschaulicht. Hier bedeutet der Schritt I das Bewegen der Massenteile M in Reihe mit gegenseitiger Anlage durch mindestens ein Kanalsegment K mithilfe der Fördereinrichtung außerhalb des Kanalsegments K. Gemäß dem Schritt II werden die Massenteile im Kanalinneren 10 mit Luft beaufschlagt. Weiterhin bevorzugt werden im Schritt III die Massenteile M im Kanalinneren 10 mit einem flüssigen Reinigungsmedium beaufschlagt. Im Rahmen dieser Reinigungsschritte ist es zudem bevorzugt, die Massenteile M entlang zumindest teilweise eines krummlinigen Reinigungswegs W_{R} zu bewegen. Optional kann ebenfalls der bereits oben diskutierte Schritt des Vibrierens (Schritt IV) genutzt werden.

Nun Bezug nehmend auf Figur 23 ist eine schematische Darstellung einer bevorzugten Ausführungsform der erfindungsgemäßen Durchlaufreinigungsanlage mit Luft als Reinigungsmedium dargestellt. Das System zur Führung der Luft als Reinigungsmedium ist hierbei mit 100 bezeichnet. Frischluft oder Umgebungsluft, dargestellt als gestrichelter Pfeil 102, wird von einem Verdichter 120 in ein Kanalsegment K gesaugt. Im Kanalsegment K strömt die Umgebungsluft 102 über eine Düse 110 in das Kanalinnere 10, in dem die zu reinigenden Werkstücke geführt werden. Entsprechend wird bevorzugt eine Verunreinigung auf den Werkstücken abgesaugt und gerade nicht abgeblasen.

Die mit Verunreinigungen beladene Umgebungsluft, dargestellt durch den Pfeil 104, wird nun einem Zyklonabscheider 115 als Abscheidevorrichtung für die Verunreinigungen zugeführt. Anschließend strömt die gereinigte Umgebungsluft durch den Verdichter 120 und wird dort aufgrund der Verlustleistung des Verdichters 120 sowie der Kompression der Luft erwärmt.

Um eine Erhöhung der Raumtemperatur zu vermeiden, wird die warme gereinigte Luft nach dem Verdichter 120 durch einen Wärmetauscher 130, vorzugsweise ein Luft/Flüssigkeits-Wärmetauscher, geleitet. Die auf diese Weise erwärmte Flüssigkeit kann entweder abgeführt werden oder für Heizzwecke verwendet werden. Die gekühlte und gereinigte Luft kann über eine Abluftleitung 106 wieder der Umgebung zugeführt werden. Die Kühlleistung des Wärmetauschers wird durch einen Temperatursensor T in der Abluftleitung 106 in Verbindung mit einem Ventil 132 in der Flüssigkeitsleitung in Strömungsrichtung hinter dem Wärmetauscher 130 gesteuert.

Figur 24 zeigt eine verbesserte und bevorzugte Ausführungsform. Im Unterschied zur obigen Ausführungsform wird die gereinigte und erwärmte Luft vom Wärmetauscher 130 über eine Rückführleitung 135 wieder dem Kanalsegment K zugeführt. Auf diese Weise wird ein Kreislauf für die Luft als Reinigungsmedium gebildet. Ein Vorteil dieser Vorgehensweise ist, dass aufgrund der Verwendung der erwärmten und gereinigten Luft ein möglicher Schmutzeintrag von außen reduziert wird. Dies gilt insbesondere dann, wenn ausschließlich gereinigte und erwärmte Luft verwendet wird. Im Kanalsegment K vorhandene Formdüsen 110 können dabei ohne Veränderung benutzt werden. Optional können Filtermatten auf den Düsen 110 aufgrund der sauberen erwärmten Luft sogar entfallen, was den Wartungsaufwand der Durchlaufreinigungsanlage entsprechend reduziert.

Aufgrund der erwärmten Luft als Reinigungsmedium kann entweder die Reinigungsleistung oder der Durchsatz der Durchlaufreinigungsanlage im entsprechenden Kanalsegment K erhöht werden. Dies ist darin begründet, dass sich beispielsweise die Viskosität von vorhandenem Öl als Verunreinigung aufgrund der Reinigung mit erwärmter Luft verringert. Hierdurch liegt das Öl in kleineren Tropfen vor und kann leichter vom Werkstück gelöst werden.

Zusätzlich ist weiterhin eine Frischluft- oder Umgebungsluftleitung 140 vorgesehen, so dass dem Kanalsegment K weiterhin Umgebungsluft 102 als Reinigungsmedium zugeführt werden kann. Die Umgebungsluft 102 kann hierbei gefiltert und/oder mit einem Lüfter angesaugt werden, was weiter unten im Detail in Verbindung mit einer weiteren bevorzugten Ausführungsform beschrieben wird.

In der Ausführungsform gemäß Fig. 24 wird die Leistung des Wärmetauschers in Abhängigkeit von der Temperatur im Kanalsegment K geregelt. Um die Temperatur der erwärmten Luft im Kreislauf zu steuern, ist im Kanalsegment daher ein Temperatursensor T vorgesehen, über den das Ventil 132 in der Flüssigkeitsleitung stromabwärts des Wärmetauschers geregelt wird. Auf diese Weise kann die Temperatur der zur Reinigung verwendeten Luft gezielt vorgegeben werden. Sollte die Temperatur der erwärmten und gereinigten Luft in der Rückführleitung 135 nicht ausreichend hoch sein, dann kann zusätzlich eine Heizvorrichtung in der Rückführleitung 135 vorgesehen sein.

Insbesondere bei Öl als Verunreinigung und aufgrund der Arbeitssicherheit ist es bevorzugt, wenn die Temperatur der erwärmten Luft vorzugsweise ungefähr 80 °C und besonders bevorzugt ungefähr 70 °C im Kanalsegment K nicht übersteigt. Eine untere Grenze für die Temperatur der erwärmten Luft im Kanalsegment K liegt vorzugsweise bei ungefähr 50 °C. Besonders bevorzugt liegt die Temperatur der erwärmten Luft bei ungefähr 65 °C. Bezogen auf die Lufttemperatur im Verdichter 120 sollte eine obere Grenze von 120 °C wegen des Flammpunkts des Öls nicht überschritten werden. Insgesamt kann die Reinigungsleistung auf diese Weise um ungefähr 40 % im Vergleich zu nicht erwärmter Luft erhöht werden. Zudem ist die Reinigungsleistung besser kontrollierbar, da insbesondere jahreszeitliche Schwankungen der Temperatur der Umgebungsluft keinen Einfluss auf die Temperatur der erwärmten Luft aufgrund des Luftkreislaufs haben.

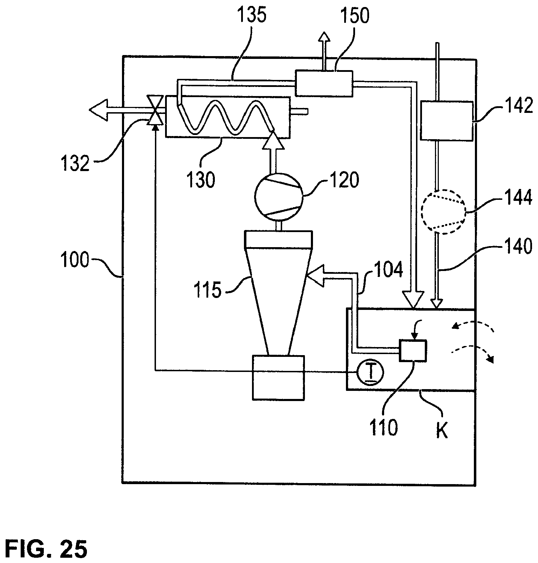

Die Ausführungsform gemäß Figur 25 unterscheidet sich von der Ausführungsform gemäß Fig. 24 dadurch, dass ein Bypass 150 in der Rückführleitung 135 der gereinigten erwärmten Luft vorgesehen ist. Auf diese Weise ist gereinigte und erwärmte Luft an die Umgebung abgebbar. Beispielsweise sind zwischen 0 und 50 %, bevorzugt 10 bis 20 %, des vom Verdichter angesaugten Volumenstroms an warmer gereinigter Luft über den Bypass 150 abführbar.

Zusätzlich ist eine Frischluftleitung 140 vorgesehen, in der ein Filter 142 sowie ein Lüfter 144 angeordnet sind. Mit der Frischluftleitung 140 wird mengenmäßig insbesondere der Volumenstrom, der über den Bypass 150 abgeführt wurde, wieder zugeführt. Dies bedeutet, dass über die Frischluftleitung 140 0 bis 50 % des vom Verdichter 120 angesaugten Volumenstroms zuführbar sind. Werden beispielsweise über den Bypass 150 10 % des Volumenstroms abgegeben, so werden über die Frischluftleitung 140 10 % wieder zugeführt.

Aufgrund dieses Aufbaus kann dem Kanalsegment K auf der einen Seite sowohl gereinigte und erwärmte Luft zur Verbesserung der Reinigungsleistung zugeführt werden. Andererseits ist dem Kanalsegment K bereits aufgrund des Filters 142 gereinigte Umgebungsluft zuführbar, so dass das gereinigte Werkstück zumindest teilweise gekühlt werden kann. Eine entsprechende Unterteilung im Kanalsegment K kann beispielsweise strömungsmechanisch erfolgen, so dass über eine gezielte Luftführung im Kanalsegment K eine entsprechende Luftmassen-Verteilung stattfindet. Wird über den Bypass 150 keine erwärmte Luft an die Umgebung abgegeben, so gleicht der Betrieb der oben beschriebenen Ausführungsform ohne Bypass 150.

Mittels des Lüfters 144 kann die Frischluft oder Umgebungsluft in das Kanalsegment K gedrückt werden. Damit wird verhindert, dass über eventuell vorhandene Leckagen oder Undichtigkeiten ungefilterte Umgebungsluft angesaugt wird. Eine mögliche Verunreinigung des zu reinigenden Werkstücks aufgrund von Verunreinigungen in der Umgebungsluft ist daher weiter minimiert.

Die erwärmte und/oder Umgebungsluft wird bzw. werden in das Kanalsegment K eingeblasen, in dem sich der Reinigungsweg befindet. Der Reinigungsweg nimmt das zu reinigende Werkstück auf und bildet zusammen mit dem zu reinigenden Werkstück eine Düse 110, über die Luft aus dem Kanalsegment angesaugt wird. Die Luft wird in dem Kanalsegment K so zur Verfügung gestellt, dass keine Ansaugung über Leckagen oder ähnliches erfolgt, sondern die zugeführte erwärmte und/oder Umgebungsluft, die vorzugsweise über Düsen angesaugt wird, in geeigneter Form über Einlassdüsen in den Reinigungsweg strömt. Der Vorteil ist, dass bestehende Reinigungswege ohne Veränderungen und/oder Erweiterungen weiter genutzt werden können. Die Reinigungsleistung wird vorteilhaft von der Luftführung im Kanalsegment K bestimmt. Weiterhin ist es bevorzugt, über die Leistungsanpassung der verwendeten Anlagentechnik an die zu reinigenden Massenteile M die Reinigungsleistung zusätzlich zu verbessern.

Ausgehend von den obigen Ausführungsformen und im Hinblick auf das Reinigungsverfahrens ist es daher bevorzugt, dass das Beaufschlagen mit Luft mit Luft erfolgt, die über die Umgebungstemperatur erwärmt und/oder im Vergleich zur Umgebungsluft gereinigt ist. Hierbei ist es besonders bevorzugt, wenn eine Absaugleitung aus dem Kanalinneren mit der Luftzufuhrleitung verbunden ist, um einen Kreislauf für gereinigte erwärmte Luft bereitzustellen. Zusätzlich kann ein Beaufschlagen der zu reinigenden Werkstücke mit Umgebungsluft erfolgen, die entweder aufgrund eines bereits vorhandenen Verdichters in das Kanalsegment eingesaugt oder mittels eines eigenen Lüfters in das Kanalsegment gefördert wird. In beiden Fällen kann eine Reinigung der Umgebungsluft vor dem Eintritt in das Kanalsegment über einen Filter erfolgen. In Kombination mit dem Lüfter ist der Filter vorzugsweise stromaufwärts des Lüfters angeordnet. Ein Steuern der Temperatur der erwärmten Luft kann mittels einer Wärmeabführvorrichtung und/oder einer Heizvorrichtung erfolgen.

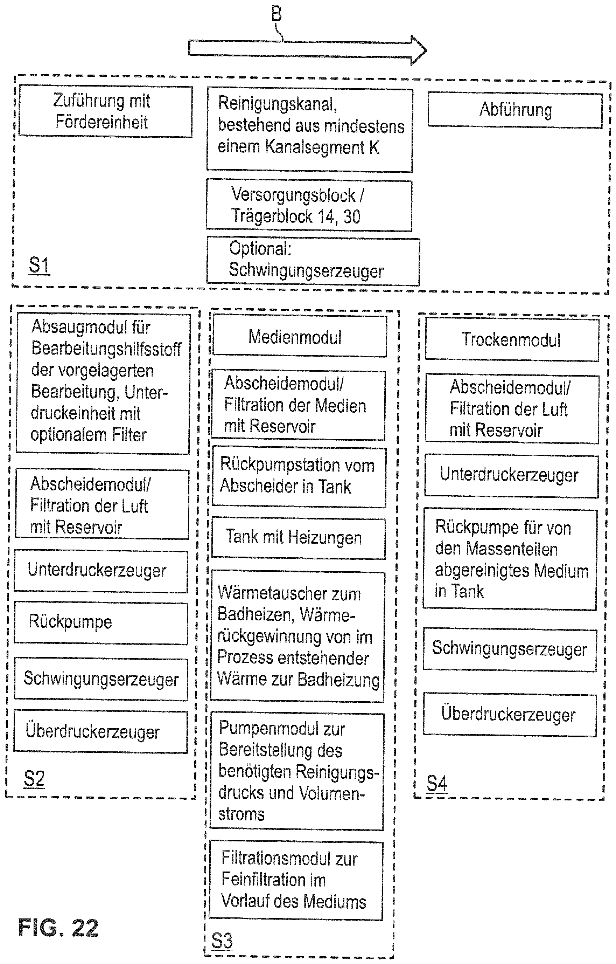

Figur 22 zeigt ein Blockschaltbild einer bevorzugten Ausführungsform der erfindungsgemäßen Durchlaufreinigungsanlage. Während der Pfeil B die Bewegungsrichtung der Massenteile M durch das mindestens eine Kanalsegment K anzeigt, bezeichnet die Gruppe S1 eine Mindestkonfiguration der Durchlaufreinigungsanlage. Diese besteht bevorzugt aus einer Fördereinheit außerhalb des Kanalinneren 10, mit der Massenteile M der Reinigung zugeführt werden. Der Reinigungskanal wird durch minimal ein Kanalsegment K gebildet, welches über den verbundenen Sockel 14 und Kanalblock 30 mit mindestens einem Reinigungsmedium, hier vorzugsweise Luft, versorgt wird. Die Luft wird ebenfalls über den Sockel 14 abgesaugt. Am Ende des Kanalsegments K erfolgt die Abfuhr der gereinigten Massenteile M mit einer weiteren Fördereinheit. Optional wird die hier beschriebene Grundkonfiguration durch zugeführte Schwingungen mit Hilfe eines Schwingungserzeugers unterstützt.

Die weiterhin gezeigten Gruppen S2, S3 und S4 zeigen Modulgruppen und deren Zusammensetzung, die in beliebiger Anzahl entsprechend dem Reinigungsbedarf in der Durchlaufreinigungsanlage eingesetzt werden können. Gemäß einer bevorzugten Ausführungsform wird zur Vorreinigung der Massenteile M die Gruppe S2 genutzt. Dazu arbeitet ein Absaugmodul mit einer Unterdruckeinheit und einem Filter, um Bearbeitungsrückstände und -hilfsstoffe von den Massenteilen M abzutragen. Um die Strömungsverhältnisse am Massenteil beeinflussen zu können, ist zusätzlich eine Überdruckeinheit, bspw. ein Kompressor, vorgesehen. Eine Rückpumpe führte die abgereinigten Materialien einem Abscheidemodul mit Filtration zu, um hier die Bearbeitungsmedien, bspw. Späne, von den Reinigungsmedien, bspw. Luft oder Wasser, zu trennen. Hierbei, und bezugnehmend auf die Ausführungsform gemäß den Figuren 24 und 25, kann erwärmte gereinigte Luft wie oben beschrieben bereitgestellt werden.

Um ausreichend Reinigungsmedien der Durchlaufreinigungsanlage bereitstellen zu können, wird vorzugsweise das Medienmodul mit seinen Peripheriekomponenten gemäß Gruppe S3 eingesetzt. Die Peripheriekomponenten gewährleisten, dass ein Reinigungsmedium zugeführt (Pumpenmodul) und gesäubert abgeführt (Abscheidemodul mit Rückpumpstation) werden kann. In einem Tank, in dem sich das Reinigungsmedium befindet, wird optional das Reinigungsmedium erwärmt. Dies ist ebenfalls über einen optionalen Wärmetauscher möglich, in dem aus dem Reinigungsprozess rückgewonnene Wärme wieder dem Reinigungsprozess bspw. über einen Wärmetauscher zugeführt wird.

Im optionalen Trockenmodul gemäß Gruppe S4 wird Luft zur Trocknung der Massenteile verwendet und nachfolgend aufgefangen und gereinigt. Dieser Reinigungsabschnitt wird bevorzugt durch einen Überdruckerzeuger und/oder einen Schwingungserzeuger und/oder einen Unterdruckerzeuger unterstützt. Auch in diesem Modul kann erwärmte gereinigte Luft bereitgestellt werden, wie es oben im Zusammenhang mit den Ausführungsformen gemäß den Figuren 24 und 25 beschrieben wurde.

### Bezugszeichenliste

- K: Modulares Kanalsegment
- M: Massenteil
- B: Bewegungsrichtung
- W_{R}: Reinigungsweg
- 10: Kanalinneres
- 11: Auflagesteg
- 12: Spannsystem
- 13: Langloch
- 14: Sockel
- 16: Medienleitung
- 18: Anschlüsse
- 20: Filter
- 22: Halterung
- 30: Kanalblock
- 32: Kanäle
- 33: Anschluss
- 34: Zufuhrleitungen
- 35: Zufuhrleitung
- 36: Abfuhrleitungen
- 41, 42: Stirnseiten
- 44: Sackloch
- 50: Schikane
- T: Temperatursensor
- 100: System zur Führung der Luft
- 102: Umgebungsluft
- 104: Umgebungsluft mit Verunreinigungen
- 106: Abluftleitung
- 110: Düse
- 115: Zyklonabscheider
- 120: Verdichter
- 130: Wärmetauscher
- 132: Ventil
- 135: Rückführleitung
- 140: Frischluftleitung/Umgebungsluftleitung
- 142: Filter
- 144: Lüfter
- 150: Bypass
- D1: erste Düsengruppe
- D2: zweite Düsengruppe
- D3: dritte Düsengruppe
- D4: vierte Düsengruppe
- 60: Aussparung
- 70: Schaft
- 75: Teller bzw. Kopf

## Patentansprüche

1. Modulares tunnelartiges Kanalsegment (K) einer Durchlaufreinigungsanlage, durch das Massenteile (M) in Längsrichtung entlang eines Reinigungswegs (W_{R}) in einem Kanalinneren (10) bewegbar sind, welches konstruktiv einen zumindest teilweise krummlinigen Verlauf des Reinigungswegs (W_{R}) definiert, **dadurch gekennzeichnet, dass**
das Kanalsegment aufgrund des Kanalinneren zumindest in umfänglicher Richtung einen abgeschlossenen Bereich darstellt und
aufgrund des krummlinigen Verlaufs des Reinigungswegs (W_{R}) eine gegenseitige Anlage benachbarter Massenteile (M) an Stirnseiten von einer flächigen Anlage in eine punktuelle Anlage während einer Bewegung durch das Kanalinnere (10) veränderbar ist.

2. Kanalsegment (K) gemäß Patentanspruch 1, das eine Mehrzahl von auf das Kanalsegment (K) verteilter Medienzufuhrleitungen (34, 35) in und mindestens eine Abfuhrleitung (36), vorzugsweise eine Absaugleitung, aus dem Kanalinneren (10) aufweist.

3. Kanalsegment (K) gemäß einem der vorhergehenden Patentansprüche, das mindestens eine Zufuhrleitung (34, 35) eines flüssigen Reinigungsmediums in und eine Abfuhrleitung (36) aus dem Kanalinneren aufweist.

4. Kanalsegment (K) gemäß einem der vorhergehenden Patentansprüche, welches ein Schnellspannsystem (12) aufweist, mit dem das Kanalsegment (K) an einem Sockel (14) befestigbar ist.

5. Kanalsegment (K) gemäß einem der vorhergehenden Patentansprüche, welches eine Mehrzahl von Schikanen (50) aufweist, die in das Kanalinnere (10) ragen, so dass benachbarte Massenteile (M) während einer Bewegung durch das Kanalinnere (10) in einer Ausrichtung zueinander veränderbar sind.

6. Kanalsegment (K) gemäß Patentanspruch 5, in welchem eine Mehrzahl von Schikanen (50) entgegen einer Gewichtskraft der Massenteile (M) und/oder eine Mehrzahl von Schikanen (50) seitlich zur Bewegungsrichtung (B) ausgerichtet in das Kanalinnere (10) ragen.

7. Kanalsegment (K) gemäß einem der vorhergehenden Patentansprüche, in welchem das Kanalinnere (10) krummlinig verläuft.

8. Kanalsegment (K) gemäß einem der vorhergehenden Patentansprüche, welches in Kombination mit einem Schwingungserzeuger, vorzugsweise ein Sockel (14), in Schwingungen versetzbar ist.

9. Durchlaufreinigungsanlage für Massenteile (M), die die folgenden Merkmale aufweist:
mindestens ein modulares tunnelartiges Kanalsegment (K), durch das Massenteile (M) in Längsrichtung entlang eines Reinigungswegs (W_{R}) in einem Kanalinneren (10) bewegbar sind,
eine Fördereinrichtung der Massenteilen (M), die außerhalb des mindestens einen Kanalsegments (K) angeordnet ist und mit der die Massenteilen (M) in einem Zwangsvorschub in Reihe und mit gegenseitiger Anlage benachbarter Massenteile (M) durch das mindestens eine Kanalsegment (K) in einer Bewegungsrichtung (B) schiebbar sind, ohne dass sich die Fördereinrichtung durch das Kanalinnere bewegt, wobei
das Kanalinnere (10) konstruktiv einen zumindest teilweise krummlinigen Verlauf des Reinigungswegs (W_{R}) definiert, und
eine Mehrzahl von auf das Kanalsegment (K) verteilte Medienzufuhrleitungen (34, 35) in und mindestens eine Abfuhrleitung (36), vorzugweise eine Absaugleitung, aus dem Kanalinneren (10), **dadurch gekennzeichnet, dass**
das modulare tunnelartige Kanalsegment (K) ein modulares tunnelartiges Kanalsegment (K) gemäß einem der vorhergehenden Patentansprüche ist,
das Kanalsegment aufgrund des Kanalinneren zumindest in umfänglicher Richtung einen abgeschlossenen Bereich darstellt und
aufgrund des krummlinigen Verlaufs des Reinigungswegs (W_{R}) die gegenseitige Anlage benachbarter Massenteile (M) an Stirnseiten von einer flächigen Anlage in eine punktuelle Anlage während einer Bewegung durch das Kanalinnere (10) veränderbar ist.

10. Durchlaufreinigungsanlage gemäß Patentanspruch 9, die mindestens eine Zufuhrleitung (34, 35) eines flüssigen Reinigungsmediums in und eine Abfuhrleitung (36) aus dem Kanalinneren (10) aufweist.

11. Durchlaufreinigungsanlage gemäß Patentanspruch 9 oder 10, in der das mindestens eine Kanalsegment (K) mithilfe eines Schnellspannsystems (12) befestigt und austauschbar ist.

12. Durchlaufreinigungsanlage gemäß einem der Patentansprüche 9, 10 oder 11, in der die Medienzufuhrleitungen (34, 35) eine Mehrzahl von Luftzufuhrleitungen umfasst, die über einen Filter (142) mit einer Umgebung verbunden sind, und in der die Abfuhrleitung (36) eine Absaugleitung ist, mit der ein Unterdruck erzeugbar ist.

13. Durchlaufreinigungsanlage gemäß einem der vorhergehenden Patentansprüche 9 bis 12, in der das mindestens eine Kanalsegment (K) eine Mehrzahl von Schikanen (50) aufweist, die in das Kanalinnere (10) ragen, so dass benachbarte Massenteile (M) während einer Bewegung durch das Kanalinnere (10) in einer Ausrichtung zueinander veränderbar sind.

14. Durchlaufreinigungsanlage gemäß Patentanspruch 13, in der eine Mehrzahl von Schikanen (50) entgegen einer Gewichtskraft der Massenteile (M) und/oder eine Mehrzahl von Schikanen (50) seitlich zur Bewegungsrichtung (B) ausgerichtet in das Kanalinnere (10) ragen.

15. Durchlaufreinigungsanlage gemäß einem der Patentansprüche 9 bis 12, in der das Kanalinnere (10) krummlinig verläuft.

16. Durchlaufreinigungsanlage gemäß einem der vorhergehenden Patentansprüche 9 bis 15, in der mindestens zwei Kanalsegmente (K) in Bewegungsrichtung (B) hintereinander angeordnet sind, um unterschiedliche Reinigungszonen bereitzustellen, wobei die Kanalsegmente (K) durch beabstandete Anordnung und/oder einen Luftvorhang und/oder eine Drucksenke voneinander getrennt sind.

17. Durchlaufreinigungsanlage gemäß einem der vorhergehenden Patentansprüche 9 bis 16, in der das mindestens eine Kanalsegment (K) in Schwingungen versetzbar ist.

18. Durchlaufreinigungsanlage gemäß einem der vorhergehenden Patentansprüche 9 bis 17, in der die Medienzufuhrleitungen (34, 35) mindestens eine Luftzufuhrleitung für erwärmte Luft umfasst, vorzugsweise in Verbindung mit einer Absaugleitung als Abfuhrleitung (36) des Kanalsegments (K) über eine Abscheidevorrichtung, so dass die zur Reinigung verwendete Luft zumindest teilweise in einem Kreislauf bewegbar ist.

19. Durchlaufreinigungsanlage gemäß Patentanspruch 18, in der weiterhin eine Wärmeabfuhrvorrichtung im Luftkreislauf vorgesehen ist, deren Leistung in Abhängigkeit von der Temperatur im Kanalsegment (K) einstellbar oder regelbar ist.

20. Durchlaufreinigungsanlage gemäß einem der Patentansprüche 18 oder 19, in der ein Bypass (150) im Luftkreislauf vorgesehen ist, so dass Luft an die Umgebung abgebbar ist, wobei die Medienzufuhrleitung (34, 35) weiterhin eine Frischluftleitung zum Zuführen von Umgebungsluft aufweist, die vorzugsweise Umgebungsluft über einen Filter (142) zuführt.

21. Durchlaufreinigungsanlage gemäß Patentanspruch 20, in der in der Frischluftleitung ein Lüfter (144) vorgesehen ist, so dass im Kanalsegment (K) ein Überdruck bereitstellbar ist.

22. Reinigungsverfahren für Massenteile (M) in einer Durchlaufreinigungsanlage, insbesondere einer Durchlaufreinigungsanlage gemäß einem der vorhergehenden Patentansprüche 9 bis 21, **gekennzeichnet durch** die folgenden Schritte:
a. Bewegen der Massenteile (M) in Reihe mit gegenseitiger Anlage durch mindestens ein modulares tunnelartiges Kanalsegment (K) gemäß einem der Patentansprüche 1 bis 8 mit einer Fördereinrichtung, die außerhalb des Kanalsegments (K) angeordnet ist,
b. Beaufschlagen der Massenteile (M) in einem Kanalinneren (10) mit Luft über eine Luftzufuhrleitung in Verbindung mit einer Umgebung und einer Absaugleitung aus dem Kanalinneren (10), wobei
c. das Bewegen der Massenteile (M) entlang eines zumindest teilweise krummlinigen Reinigungswegs (W_{R}) erfolgt, wodurch eine Anordnung benachbarter Massenteile (M) zueinander während der Bewegung verändert wird.

23. Reinigungsverfahren gemäß Patentanspruch 22, mit dem weiteren Schritt:
Vibrieren des mindestens einen Kanalsegments (K) und damit der Massenteile (M), so dass Verschmutzungen der Massenteile (M) gelöst werden.

24. Reinigungsverfahren gemäß Patentanspruch 22 oder 23, wobei die Massenteile (M) mit gegenüber der Umgebung erwärmter Luft beaufschlagt werden.

## Claims

1. Modular, tunnel like channel segment (K) of a run through cleaning device through which mass parts (M) are movable in longitudinal direction along a cleaning path (W_{R}) in a channel interior (10), which constructively defines an at least partly curvilinear course of the cleaning path (W_{R}), **characterized in that**
the channel segment constitutes an enclosed portion due to the channel interior at least in circumferential direction and
due to the curvilinear course of the cleaning path (W_{R}), a mutual attachment of neighboring mass parts (M) to face sides is changeable from a plane attachment to a punctual attachment during a movement through the channel interior (10).

2. Channel segment (K) according to claim 1 having a plurality of media supply pipes (34, 35), distributed over the channel segment (K), into and at least one discharge pipe (36), preferably a suction pipe, out of the channel interior (10).

3. Channel segment (K) according to one of the preceding claims, having at least one supply pipe (34, 35) of a liquid cleaning medium into and a discharge pipe (36) out of the channel interior.

4. Channel segment (K) according to one of the preceding claims, having a quick clamping system (12) with which the channel segment (K) is fastenable to a socket (14).

5. Channel segment (K) according to one of the preceding claims having a plurality of chicanes (50) projecting into the channel interior (10) so that neighboring mass parts (M) are changeable in terms of an alignment to each other during a movement through the channel interior (10).

6. Channel segment (K) according to claim 5, in which a plurality of chicanes (50) projects into the channel interior (10) contrary to a weight force of the mass parts (M) and/or a plurality of chicanes which are aligned laterally to the direction of movement (B) projects into the channel interior (10).

7. Channel segment (K) according to one of the preceding claims in which the channel interior (10) has a curvilinear course.

8. Channel segment (K) according to one of the preceding claims, which is settable into vibrations in combination with a vibration generator, preferably a socket (14).

9. Run through cleaning device for mass parts (M), having the following features:
at least one modular tunnel like channel segment (K) through which mass parts (M) are movable in longitudinal direction along a cleaning path (W_{R}) in a channel interior (10),
a supply device of the mass parts (M) which is arranged outside of the at least one channel segment (K) and with which the mass parts (M) are shiftable in a forced feed in series and with mutual attachment of neighboring mass parts (M) through the at least one channel segment (K) in a direction of movement (B), without the supply device moving through the channel interior, wherein
the channel interior (10) constructively defines an at least partly curvilinear course of the cleaning path (W_{R}), and
a plurality of media supply pipes (34, 35) distributed on the channel segment (K) into and at least one discharge pipe (36), preferably a suction pipe, out of the channel interior (10), **characterized in that**
the modular, tunnel like channel segment (K) is a modular tunnel like channel segment (K) according to one of the preceding claims,
the channel segment constitutes an enclosed portion at least in circumferential direction due to the channel interior and
due to the curvilinear course of the cleaning path (W_{R}), the mutual attachment of neighboring mass parts (M) to face sides is changeable from a plane attachment into a punctual attachment during a movement through the channel interior (10).

10. Run through cleaning device according to claim 9, having at least one supply pipe (34, 35) of a liquid cleaning medium into and a discharge pipe (36) out of the channel interior (10).

11. Run through cleaning device according to claim 9 or 10, in which the at least one channel segment (K) is fastened and changeable with the help of a quick clamping system (12).

12. Run through cleaning device according to one of the claims 9, 10 or 11, in which the media supply pipes (34, 35) comprise a plurality of air supply pipes which are connected by means of a filter (142) with a surrounding area and in which the discharge pipe (36) is a suction pipe with which a negative pressure is producible.

13. Run through cleaning device according to one of the preceding claims 9 to 12, in which the at least one channel segment (K) comprises a plurality of chicanes (50) projecting into the channel interior (10) so that neighboring mass parts (M) are changeable in terms of an alignment to each other during a movement through the channel interior (10).

14. Run through cleaning device according to claim 13, in which a plurality of chicanes (50) projects into the channel interior (10) contrary to a weight force of the mass parts (M) and/or a plurality of chicanes which are aligned laterally to the direction of movement (B) projects into the channel interior (10).

15. Run through cleaning device according to one of the claims 9 to 12 in which the channel interior (10) has a curvilinear course.

16. Run through cleaning device according to one of the preceding claims 9 to 15 in which at least two channel segments (K) are arranged one behind the other in a direction of movement (B), in order to provide different cleaning zones, wherein the channel segments (K) are separated from one another by means of a spaced arrangement and/or an air curtain and/or a pressure sink.

17. Run through cleaning device according to one of the preceding claims 9 to 16 in which the at least one channel segment (K) is settable into vibrations.

18. Run through cleaning device according to one of the preceding claims 9 to 17 in which the media supply pipes (34, 35) comprise at least one air supply pipe for heated air, preferably in connection with a suction pipe as discharge pipe (36) of the channel segment (K) by means of a separation device so that the air used for cleaning is movable at least partly in a circuit.

19. Run through cleaning device according to claim 18, in which furthermore, a heat discharge device is provided in the air circuit, the performance of the former being adjustable or controllable depending on the temperature in the channel segment (K).

20. Run through cleaning device according to one of the claims 18 or 19, in which a bypass (150) is provided in the air circuit so that air is releasable to the surrounding area, wherein the media supply pipe (34, 35) furthermore comprises a fresh air pipe for delivering ambient air, the fresh air pipe preferably delivering ambient air by means of a filter (142).

21. Run through cleaning device according to claim 20, in which a ventilator (144) is provided in the fresh air pipe so that an excess pressure is providable in the channel segment (K).

22. Cleaning method for mass parts (M) in a run through cleaning device, in particular a run through cleaning device according to one of the preceding claims 9 to 21, **characterized by** the following steps:
a. moving the mass parts (M) in series with mutual attachment through at least one modular tunnel like channel segment (K) according to one of the claims 1 to 8 with a supply device that is arranged outside of the channel segment (K),
b. adding air to the mass parts (M) in a channel interior (10) via an air supply pipe in connection with a surrounding area and a suction pipe out of the channel interior (10), wherein
c. the moving of the mass parts (M) takes place along an at least partly curvilinear cleaning path (W_{R}) so that an arrangement of neighboring mass parts (M) to one another is changed during the movement.

23. Cleaning method according to claim 22, with the further step:
vibrating the at least one channel segment (K) and thus the mass parts (M) so that pollutions are removed from the mass parts (M).

24. Cleaning method according to claim 22 or 23, wherein air is added to the mass parts (M) which is heated compared with the surrounding area.

## Revendications

1. Segment de canal modulaire en forme de tunnel (K) d'une installation de nettoyage continu, à travers lequel des pièces en vrac (M) sont déplaçables, dans la direction longitudinale, le long d'un chemin de nettoyage (W_{R}) dans un intérieur de canal (10), lequel définit par construction un trajet au moins partiellement curviligne du chemin de nettoyage (W_{R}), **caractérisé en ce que**
le segment de canal représente, en raison de l'intérieur de canal, une zone fermée, au moins dans la direction circonférentielle, et
**en ce qu'**un contact réciproque de pièces en vrac (M) voisines sur les côtés frontaux peut passer d'un contact de surface à un contact ponctuel pendant un déplacement à travers l'intérieur de canal (10), en raison du trajet curviligne du chemin de nettoyage (W_{R}).

2. Segment de canal (K) selon la revendication 1, lequel présente une multiplicité de conduites d'alimentation en fluides (34, 35) vers l'intérieur de canal (10), réparties sur le segment de canal (K), et au moins une conduite d'évacuation (36), de préférence une conduite d'aspiration, hors de l'intérieur de canal (10).

3. Segment de canal (K) selon l'une des revendications précédentes, lequel présente au moins une conduite d'alimentation (34, 35) d'un fluide de nettoyage liquide vers l'intérieur de canal et une conduite d'évacuation (36) hors de l'intérieur de canal.

4. Segment de canal (K) selon l'une des revendications précédentes, présentant un système de fixation rapide (12) avec lequel le segment de canal (K) peut être fixé sur un socle (14).

5. Segment de canal (K) selon l'une des revendications précédentes, lequel présente une multiplicité de chicanes (50), lesquelles dépassent dans l'intérieur de canal (10), de telle sorte que l'orientation l'une vers l'autre de pièces en vrac (M) voisines peut être modifiée pendant un déplacement à travers l'intérieur de canal (10).

6. Segment de canal (K) selon la revendication 5, dans lequel une multiplicité de chicanes (50) dépassent dans l'intérieur de canal (10) contre un poids des pièces en vrac (M), et/ou une multiplicité de chicanes (50) dépassent dans l'intérieur de canal (10) avec orientation latérale par rapport à la direction de déplacement (B).

7. Segment de canal (K) selon l'une des revendications précédentes, dans lequel l'intérieur de canal (10) s'étend de façon curviligne.

8. Segment de canal (K) selon l'une des revendications précédentes, lequel peut être mis en vibration en combinaison avec un générateur de vibrations, de préférence un socle (14).

9. Installation de nettoyage en continu pour pièces en vrac (M), laquelle présente les caractéristiques suivantes :
au moins un segment de canal modulaire en forme de tunnel (K) à travers lequel des pièces en vrac (M) sont déplaçables, dans la direction longitudinale, le long d'un chemin de nettoyage (W_{R}) dans un intérieur de canal (10),
un dispositif de transport des pièces en vrac (M), lequel est disposé en dehors de l'au moins un segment de canal (K), et avec lequel les pièces en vrac (M) peuvent être poussées dans une direction de déplacement (B) à travers l'au moins un segment de canal (K) par avance forcée, en rangée et avec contact réciproque des pièces en vrac (M) voisines, sans que le dispositif de transport se déplace à travers l'intérieur de canal, l'intérieur de canal (10) définissant par construction un trajet au moins partiellement curviligne du chemin de nettoyage (W_{R}), et
une multiplicité de conduites d'alimentation en fluide (34, 35) vers l'intérieur de canal (10), réparties sur le segment de canal (K), et au moins une conduite d'évacuation (36), de préférence une conduite d'aspiration, hors de l'intérieur de canal (10), **caractérisée en ce que**
le segment de canal modulaire en forme de tunnel (K) est un segment de canal modulaire en forme de tunnel (K) selon l'une des revendications précédentes,
**en ce que** le segment de canal représente, en raison de l'intérieur de canal, une zone fermée, au moins dans la direction circonférentielle, et
**en ce que** le contact réciproque de pièces en vrac (M) voisines sur les côtés frontaux peut passer d'un contact de surface à un contact ponctuel pendant un déplacement à travers l'intérieur de canal (10), en raison du trajet curviligne du chemin de nettoyage (W_{R}).

10. Installation de nettoyage continu selon la revendication 9, laquelle présente au moins une conduite d'alimentation (34, 35) d'un fluide de nettoyage liquide vers l'intérieur de canal (10) et une conduite d'évacuation (36) hors de l'intérieur de canal (10).

11. Installation de nettoyage continu selon la revendication 9 ou 10, dans laquelle l'au moins un segment de canal (K) est fixé à l'aide d'un système de fixation rapide (12), et peut être remplacé.

12. Installation de nettoyage continu selon l'une des revendications 9, 10 ou 11, dans laquelle les conduites d'alimentation en fluide (34, 35) comprennent une multiplicité de conduites d'arrivée d'air, lesquelles sont reliées avec un environnement par un filtre (142), et dans lesquelles la conduite d'évacuation (36) est une conduite d'aspiration avec laquelle une dépression peut être générée,

13. Installation de nettoyage continu selon l'une des revendications précédentes 9 à 12, dans laquelle l'au moins un segment de canal (K) présente une multiplicité de chicanes (50), lesquelles dépassent dans l'intérieur de canal (10) de telle sorte que l'orientation l'une vers l'autre de pièces en vrac (M) voisines peut être modifiée pendant un déplacement à travers l'intérieur de canal (10).

14. Installation de nettoyage continu selon la revendication 13, dans laquelle une multiplicité de chicanes (50) dépassent dans l'intérieur de canal (10) contre un poids des pièces en vrac (M), et/ou une multiplicité de chicanes (50) dépassent dans l'intérieur de canal (10) avec orientation latérale par rapport à la direction de déplacement (B).

15. Installation de nettoyage continu selon l'une des revendications 9 à 12, dans laquelle l'intérieur de canal (10) s'étend de façon curviligne.

16. Installation de nettoyage continu selon l'une des revendications précédentes 9 à15, dans laquelle au moins deux segments de canal (K) sont disposés l'un derrière l'autre dans la direction de déplacement (B), afin de mettre à disposition des zones de nettoyage différentes, les segments de canal (K) étant séparés les uns des autres par une disposition à distance et/ou un rideau d'air et/ou une dépressurisation.

17. Installation de nettoyage continu selon l'une des revendications précédentes 9 à 16, dans laquelle l'au moins un segment de canal (K) peut être mis en vibrations.

18. Installation de nettoyage continu selon l'une des revendications précédentes 9 à 17, dans laquelle les conduites d'alimentation en fluide (34, 35) comprennent au moins une conduite d'arrivée d'air pour air chauffé, de préférence conjointement avec une conduite d'aspiration comme conduite d'évacuation (36) du segment de canal (K) par un dispositif de séparation de telle sorte que l'air utilisé pour le nettoyage peut être déplacé au moins partiellement dans un circuit.

19. Installation de nettoyage continu selon la revendication 18, dans laquelle un dispositif d'évacuation de chaleur est par ailleurs prévu dans le circuit d'air, dont la puissance est réglable ou contrôlable en fonction de la température dans le segment de canal (K).

20. Installation de nettoyage continu selon l'une des revendications 18 ou 19, dans laquelle une dérivation (150) est prévue dans le circuit d'air de telle sorte que l'air peut être évacué vers l'environnement, la conduite d'alimentation en fluide (34, 35) présentant par ailleurs une conduite d'air frais pour l'amenée d'air ambiant, laquelle amène de l'air ambiant de préférence par un filtre (142).

21. Installation de nettoyage continu selon la revendication 20, dans laquelle un ventilateur (144) est prévu dans la conduite d'air frais, de telle sorte qu'une surpression peut être mise à disposition dans le segment de canal (K).

22. Procédé de nettoyage pour des pièces en vrac (M) dans une installation de nettoyage continu, en particulier une installation de nettoyage continu selon l'une des revendications précédentes 9 à 21, **caractérisé par** les étapes suivantes :
a. déplacement des pièces en vrac (M) en rangée avec contact réciproque par l'au moins un segment de canal modulaire en forme de tunnel (K) selon l'une des revendications 1 à 8 avec un dispositif de transport, lequel est disposé en dehors du segment de canal (K),
b. alimentation en air des pièces en vrac (M) dans un intérieur de canal (10) par une conduite d'amenée d'air conjointement avec un environnement et une conduite d'aspiration hors de l'intérieur de canal (10),
c. le déplacement des pièces en vrac (M) étant effectué le long d'un chemin de nettoyage au moins partiellement curviligne (W_{R}), par quoi une disposition de pièces en vrac (M) voisines l'une par rapport à l'autre peut être modifiée pendant le déplacement.

23. Procédé de nettoyage selon la revendication 22, avec l'étape supplémentaire : mise en vibration de l'au moins un segment de canal (K) et par suite des pièces en vrac (M) de telle sorte que des salissures sur les pièces en vrac (M) sont détachées.

24. Procédé de nettoyage selon la revendication 22 ou 23, les pièces en vrac (M) étant alimentées en air chauffé par rapport à l'environnement.
